(19) Europäisches Patentamt
European Patent Office
Office européen des brevets

(11) **EP 4 753 344 A1**

(12) **EUROPEAN PATENT APPLICATION**
published in accordance with Art. 153(4) EPC

(43) Date of publication:
**03.06.2026 Bulletin 2026/23**

(21) Application number: **24855499.0**

(22) Date of filing: **08.07.2024**

(51) International Patent Classification (IPC):
***H04W 56/00*** (2009.01)

(52) Cooperative Patent Classification (CPC):
**H04B 17/364; H04L 25/02; H04W 56/00**

(86) International application number:
**PCT/CN2024/104147**

(87) International publication number:
**WO 2025/039770 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.08.2023 CN 202311056407**

(71) Applicant: HUAWEI TECHNOLOGIES CO., LTD.
**Shenzhen 518129 (CN)**

(72) Inventors:
- ZHANG, Xiaoyu
  **Shenzhen, Guangdong 518129 (CN)**
- YU, Tong
  **Shenzhen, Guangdong 518129 (CN)**
- LIAO, Shuri
  **Shenzhen, Guangdong 518129 (CN)**
- DOU, Shengyue
  **Shenzhen, Guangdong 518129 (CN)**

(74) Representative: **Maiwald GmbH
Engineering
Elisenhof
Elisenstrasse 3
80335 München (DE)**

(54) **METHOD FOR SYNCHRONIZATION, APPARATUS, AND COMPUTER-READABLE STORAGE MEDIUM**

(57) The present disclosure provides a method and apparatus for synchronization, and a computer-readable storage medium. In some embodiments, a user equipment determines an offset variation between the user equipment and a network device based on a received first reference signal, where the offset variation includes a time offset variation and/or a frequency offset variation; the user equipment determines, based on a time-domain delay amount of a second reference signal relative to the first reference signal, a time domain position of the second reference signal, where the time-domain delay amount is less than a transmission periodicity of the first reference signal; and the user equipment updates the offset variation based on the second reference signal detected at the time domain position. In this manner, the user equipment may determine, within a range of a transmission periodicity, an offset variation based on a time-domain delay amount and based on both the first reference signal and the second reference signal. In this way, a quantity of occasions for determining, within the transmission periodicity, the offset variation is increased, so that the offset variation can be updated more quickly, thereby ensuring communication efficiency.

FIG. 5

**Description**

**TECHNICAL FIELD**

Embodiments of the present disclosure relate to the communication field, and more specifically, to a method and apparatus for synchronization, and a computer-readable storage medium.

**BACKGROUND**

In a communication system, information exchange between a network device and a user equipment is involved. To ensure communication quality, alignment, for example, time alignment and frequency alignment, between a sending device and a receiving device is usually required. However, due to various reasons, there is an offset between the network device and the user equipment, for example, a time domain offset and/or a frequency domain offset, and an offset value is not fixed and changes with time. Therefore, how to accurately determine an offset variation in a timely manner is one of problems that urgently need to be resolved.

**SUMMARY**

Example embodiments of the present disclosure provide a solution for determining an offset variation between a user equipment and a network device.

According to a first aspect, a method for synchronization is provided. The method may be used in a user equipment or a chip disposed in the user equipment. The method includes: determining an offset variation between the user equipment and a network device based on a received first reference signal, where the offset variation includes a time offset variation and/or a frequency offset variation; determining, based on a time-domain delay amount of the second reference signal relative to the first reference signal, a time domain position of a second reference signal, where the time-domain delay amount is less than a transmission periodicity of the first reference signal; and updating the offset variation based on the second reference signal detected at the time domain position.

In this manner, the user equipment may determine, within a range of a transmission periodicity, an offset variation based on a time-domain delay amount and based on both the first reference signal and the second reference signal. In this way, a quantity of occasions for determining, within the transmission periodicity, the offset variation is increased, so that the offset variation can be updated more quickly, thereby ensuring communication efficiency.

In some embodiments of the first aspect, the method further includes: receiving configuration information from the network device, where the configuration information indicates the time-domain delay amount of the second reference signal relative to the first reference signal. In this manner, the network device may indicate the time-domain delay amount based on the configuration information, so that signaling overheads can be reduced.

In some embodiments of the first aspect, the method further includes: receiving update configuration information from the network device, where the update configuration information indicates an updated time-domain delay amount of the second reference signal relative to the first reference signal. In this manner, the network device may update the time-domain delay amount in an adaptive manner based on the update configuration information, so that a quantity of occasions for the user equipment to determine the offset variation can be increased or reduced.

In some embodiments of the first aspect, the method includes: receiving configuration information from the network device, where the configuration information indicates a time-domain delay amount of a second signal group relative to a first signal group, the first signal group and the second signal group have a same beam coverage range, the first signal group includes the first reference signal, and the second signal group includes the second reference signal. In this manner, the network device may notify the user equipment of the time-domain delay amount between the first signal group and the second signal group that have the same coverage range, so that the signal groups are paired with each other, and the time-domain delay amount does not need to be indicated at a granularity of a reference signal, thereby reducing signaling overheads.

In some embodiments of the first aspect, the configuration information further indicates a signal measurement window, and the determining the time domain position of the second reference signal includes: determining that for the time domain position, a time-domain delay amount after a reception time domain position of the first reference signal is used as a start point, and the signal measurement window is used as a time length. In this manner, the network device may configure the signal measurement window, so that the user equipment can receive the second reference signal with a higher signal quality, thereby ensuring that the offset variation determined based on the second reference signal is more accurate.

In some embodiments of the first aspect, the method further includes: detecting at least one signal within the time domain position; and determining the second reference signal from the at least one signal based on a signal parameter of each of the at least one signal.

In some embodiments of the first aspect, determining the second reference signal from the at least one signal includes: determining the signal parameter of each of the at least one signal; and determining a signal whose signal parameter exceeds a preset threshold as the second reference signal. Optionally, the signal parameter includes at least one of the following: a signal strength, signal quality, or a signal-to-noise ratio. In this manner, the user equipment may determine the offset variation based on the signal whose signal parameter exceeds the preset threshold, so that an obtained result is more accurate.

In some embodiments of the first aspect, the method further includes: determining a first part of the offset variation between the user equipment and the network device based on location information of the network device and location information of the user equipment, where the offset variation is a second part of the offset variation. Optionally, the network device is a satellite base station in a non-terrestrial network (Non-Terrestrial Network, NTN). Optionally, the location information of the network device is included in ephemeris information of the network device.

In some embodiments of the first aspect, the first reference signal is a synchronization signal block (Synchronization Signal Block, SSB), and the second reference signal is a tracking reference signal (Tracking Reference Signal, TRS). In this manner, the SSB and the TRS may be alternately sent at a specific time interval, to increase a quantity of occasions for the user equipment to determine the offset variation.

In some embodiments of the first aspect, the configuration information may include a time domain position of a TRS associated with the user equipment. For example, the TRS associated with the user equipment is a user-level TRS. In some embodiments of the first aspect, the configuration information may further include one or more SSBs that have a pairing relationship with the user-level TRS, and the one or more SSBs are one or more potential to-be-measured SSBs that are of the user equipment and that are determined by the network device.

In some embodiments of the first aspect, both the first reference signal and the second reference signal are TRSs, and the first reference signal and the second reference signal have adjacent beam coverage ranges.

For example, in response to that a signal-to-noise ratio of the first reference signal exceeds a preset signal-to-noise ratio (signal-to-noise ratio, SNR) threshold, the user equipment determines the offset variation based on the first reference signal. For example, in response to that a signal-to-noise ratio of the second reference signal exceeds the preset SNR threshold, the user equipment updates the offset variation based on the second reference signal. For example, the user equipment further receives a third reference signal, and in response to that a signal-to-noise ratio of the third reference signal is less than the preset SNR threshold, the user equipment stops or abandons updating the offset variation based on the third reference signal. For example, the third reference signal is the TRS.

According to a second aspect, a method for synchronization is provided. The method may be used in a network device or a chip disposed in the network device. The method includes: sending a first reference signal to a user equipment; determining, based on a time-domain delay amount of the second reference signal relative to the first reference signal, a time domain position of the second reference signal, where the time-domain delay amount is less than a transmission periodicity of the first reference signal; and sending the second reference signal to the user equipment at the time domain position.

In some embodiments of the second aspect, the method further includes: sending configuration information to the user equipment, where the configuration information indicates a time-domain delay amount of the second reference signal relative to the first reference signal.

In some embodiments of the second aspect, the method further includes: sending update configuration information to the user equipment, where the update configuration information indicates an updated time-domain delay amount of the second reference signal relative to the first reference signal.

In some embodiments of the second aspect, the method further includes: sending the configuration information to the user equipment, where the configuration information indicates a time-domain delay amount of a second signal group relative to a first signal group, the first signal group and the second signal group have a same beam coverage range, the first signal group includes the first reference signal, and the second signal group includes the second reference signal.

In some embodiments of the second aspect, the configuration information further indicates a signal measurement window, and the signal measurement window represents a time length of the time domain position.

In some embodiments of the second aspect, the first reference signal is an SSB, and the second reference signal is a TRS.

In some embodiments of the second aspect, both the first reference signal and the second reference signal are TRSs, and the first reference signal and the second reference signal have adjacent beam coverage ranges.

It should be noted that some embodiments and beneficial effects of the first aspect are also applicable to the second aspect. For brevity, details are not described herein again.

According to a third aspect, a method for synchronization is provided, and the method may be used in a user equipment or a chip disposed in the user equipment. The method includes: determining an offset variation between the user equipment and a network device based on a received first reference signal, where the offset variation includes a time offset variation and/or a frequency offset variation; determining, based on a pairing relationship between a first-type signal and a second-type signal, a time domain position of a second reference signal that is paired with the first reference signal, where a time-domain delay amount between the first reference signal in the first-type signal and the second reference signal in the second-type signal that have a pairing relationship is a fixed value, and the fixed value is less than a transmission periodicity of the first reference signal; and updating the offset variation based on the second reference signal detected at the time domain position.

In this manner, the network device may configure, based on the pairing relationship, that an interval between the first reference signal and the second reference signal is a fixed interval value, and the fixed value is less than the transmission periodicity. Therefore, the user equipment may determine, within a range of a transmission periodicity, an offset variation based on a time-domain delay amount and based on both the first reference signal and the second reference signal. In this way, a quantity of occasions for determining, within the transmission periodicity, the offset variation is increased, so that the offset variation can be updated more quickly, thereby ensuring communication efficiency.

In some embodiments of the third aspect, the method further includes: receiving configuration information from the network device, where the configuration information indicates the pairing relationship between the first-type signal and the second-type signal.

In some embodiments of the third aspect, the determining the time domain position of the second reference signal includes: determining, based on the configuration information and the received first reference signal, the time domain position of the second reference signal that is paired with the first reference signal. For example, the configuration information may indicate the time domain position of the second reference signal. The user equipment may determine, based on pairing information, that the second reference signal is paired with the first reference signal, so as to obtain the time domain position of the second reference signal from the configuration information. In this manner, the network device may configure the time domain position, thereby simplifying an operation on the user equipment.

In some embodiments of the third aspect, the first reference signal and the second reference signal have a same beam coverage range.

In some embodiments of the third aspect, the first-type signal is an SSB, and the second-type signal is a TRS.

According to a fourth aspect, a method for synchronization is provided, and the method may be used in a network device or a chip disposed in the network device. The method includes: sending configuration information to a user equipment, where the configuration information indicates a pairing relationship between a first-type signal and a second-type signal, and a time-domain delay amount between a first reference signal in the first-type signal and a second reference signal in the second-type signal that have a pairing relationship is a fixed value, and the fixed value is less than a transmission periodicity of the first reference signal; sending the first reference signal to the user equipment; and sending the second reference signal to the user equipment.

In some embodiments of the fourth aspect, a time-domain delay amount between a third reference signal in the first-type signal and a fourth reference signal in the second-type signal that have a pairing relationship is also the fixed value. For example, the pairing relationship may be indicated based on QCL in a TCI status.

In some embodiments of the fourth aspect, the first reference signal and the second reference signal have a same beam coverage range.

In some embodiments of the fourth aspect, the first-type signal is an SSB, and the second-type signal is a TRS.

It should be noted that some embodiments and beneficial effects of the third aspect are also applicable to the fourth aspect. For brevity, details are not described herein again.

According to a fifth aspect, a communication apparatus for synchronization (for example, a user equipment or a chip disposed in the user equipment) is provided, and includes a component configured to perform an operation of the method according to any one of the first aspect or the embodiments of the first aspect, or includes a component configured to perform an operation of the method according to any one of the third aspect or the embodiments of the third aspect. Optionally, the component may be implemented as a unit, a module, or the like.

According to a sixth aspect, a communication apparatus for synchronization (for example, a network device or a chip disposed in the network device) is provided, and includes a component configured to perform an operation of the method according to any one of the second aspect or the embodiments of the second aspect, or includes a component configured to perform an operation of the method according to any one of the fourth aspect or the embodiments of the fourth aspect. Optionally, the component may be implemented as a unit, a module, or the like.

According to a seventh aspect, a network device is provided, and includes a transceiver, a processor, and a memory, where the memory stores instructions executed by the processor, and when the instructions are executed by the processor, the network device is caused to perform, by using the transceiver, an operation of the method according to any one of the second aspect, the fourth aspect, or the embodiments of the second aspect or the fourth aspect.

According to an eighth aspect, a network device is provided, and includes a transceiver, a processor, and a memory, where the memory stores instructions executed by the processor, and when the instructions are executed by the processor, the network device is caused to perform, by using the transceiver, an operation of the method according to any one of the second aspect, the fourth aspect, or the embodiments of the second aspect or the fourth aspect.

According to a ninth aspect, a computer-readable storage medium is provided. The computer-readable storage medium stores a computer program, and when the computer program is executed by a processor, an operation of the method according to any one of the first aspect to the fourth aspect or the embodiments of the first aspect to the fourth aspect is implemented.

According to a tenth aspect, a chip or a chip system is provided. The chip or the chip system includes a processing circuit, and is configured to implement an operation of the method according to any one of the first aspect to the fourth aspect or the embodiments of the first aspect to the fourth aspect.

According to an eleventh aspect, a computer program or a computer program product is provided. The computer program or the computer program product is stored on a computer-readable medium in a tangible form and includes computer-executable instructions. When the computer-executable instructions are executed, a device is caused to implement an operation of the method according to any one of the first aspect to the fourth aspect or the embodiments of the first aspect to the fourth aspect.

It should be noted that some embodiments and beneficial effects of the foregoing method aspects are also applicable to an apparatus aspect, a user equipment aspect, a network device aspect, a computer-readable storage medium aspect, a chip or chip system aspect, a computer program or computer program product aspect. For brevity, details are not described herein again.

## BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.

FIG. 1 is a diagram of a satellite communication-based transparent forwarding scenario;
FIG. 2 is a diagram of a satellite communication-based transparent forwarding scenario;
FIG. 3 is a diagram of a satellite communication-based regeneration mode scenario;
FIG. 4 is a diagram of a system in which an embodiment of the present disclosure may be implemented;
FIG. 5 is a schematic flowchart of interaction in a communication process according to some embodiments of the present disclosure;
FIG. 6 is a diagram of an SSB sending pattern to which an embodiment of the present disclosure may be applied;
FIG. 7 is a diagram in which a second transmission periodicity is 640 ms and a time-domain delay amount is 325 ms;
FIG. 8 is a diagram in which a second transmission periodicity is 320 ms and a time-domain delay amount is 165 ms;
FIG. 9 is a diagram in which a second transmission periodicity is 1280 ms and a time-domain delay amount is 325 ms;
FIG. 10 shows an example of a change that is caused in an SSB measured by a user equipment and that is caused due to movement of a network device;
FIG. 11 is a diagram of determining a first part of a time-frequency offset variation based on location information;
FIG. 12 is a diagram of determining an offset variation according to some example embodiments of the present disclosure;
FIG. 13 shows an example of a change that is caused in an SSB measured by a user equipment and that is caused due to movement of a network device;
FIG. 14 is a diagram of determining an offset variation according to some example embodiments of the present disclosure;
FIG. 15 is a diagram in which 16 TRSs are used as an example;
FIG. 16 is a diagram of a TRS transmission sequence according to some example embodiments of the present disclosure;
FIG. 17 is a diagram of determining an offset variation according to some example embodiments of the present disclosure;
FIG. 18 is a schematic flowchart of interaction in a communication process according to some embodiments of the present disclosure;
FIG. 19 is a diagram of determining an offset variation according to some example embodiments of the present disclosure;
FIG. 20 is a block diagram of a communication apparatus according to some embodiments of the present disclosure;
FIG. 21 is a block diagram of a communication apparatus according to some embodiments of the present disclosure; and
FIG. 22 is a block diagram of an example device that may be used to implement an embodiment of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure may be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may represent different objects or a same object. Other explicit and implicit definitions may also be included below.

Embodiments of the present disclosure may be implemented according to any appropriate communication protocol, including but not limited to cellular communication protocols such as a 3rd generation (3rd Generation, 3G) cellular communication protocol, a 4th generation (4G) cellular communication protocol, a 5th generation (5G) cellular communication protocol, and a 6th generation (6G) cellular communication protocol, a wireless local area network communication protocol like Institute of Electrical and Electronics Engineers (Institute of Electrical and Electronics Engineers, IEEE) 802.11, and/or any other protocol currently known or developed in the future.

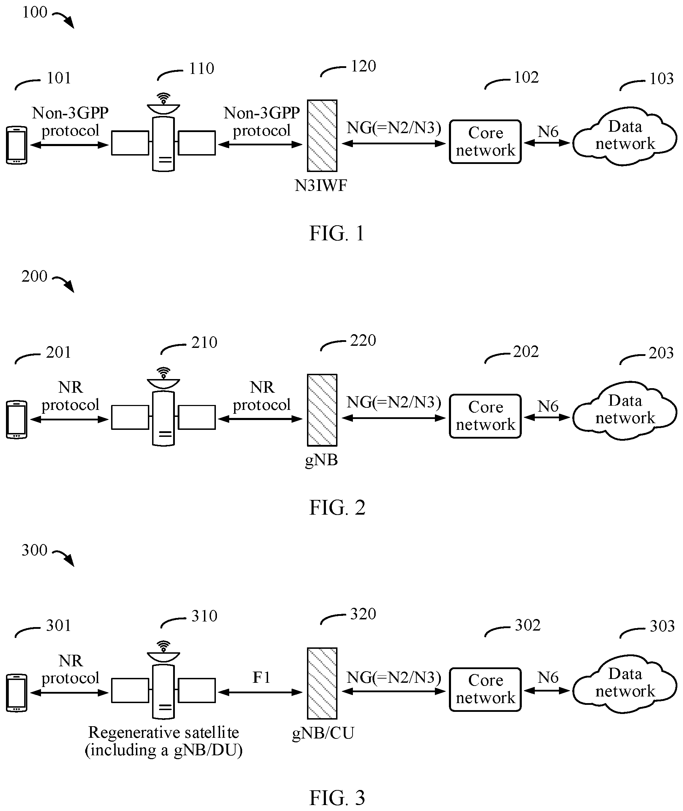

FIG. 1 to FIG. 3 are diagrams of scenarios to which some embodiments of the present disclosure may be applied. Specifically, FIG. 1 shows a satellite communication-based transparent forwarding scenario 100 to which access is provided according to a non-3rd generation partnership project (non-3rd Generation Partnership Project, N3GPP) radio protocol. FIG. 2 shows a satellite communication-based transparent forwarding scenario 200 to which access is provided according to a new radio (New Radio, NR) protocol. FIG. 3 shows a satellite communication-based regeneration mode scenario 300 to which access is provided according to an NR protocol.

In the transparent forwarding scenarios 100 and 200, a satellite 110 and a satellite 210 perform frequency conversion and forwarding. In the regeneration mode scenario 300, a satellite 310 includes a gNodeB (gNB) or a distributed unit (Distributed Unit, DU).

A core network aims to complete three functions of registration, connection, and session management. For example, the core network may include a core network 102 in FIG. 1, a core network 202 in FIG. 2, and a core network 302 in FIG. 3, and the core network may communicate with data networks 103, 203, and 303 through an N6 interface. The core network may include a network exposure function (Network Exposure Function, NEF), which exposes a service and a capability of a 3GPP network function to an application function (Application Function, AF), and may also cause the AF to provide information for the 3GPP network function. The core network may include a policy and charging function (policy and charging function, PCF), which performs policy management on a charging policy and a quality of service (Quality-of-Service, QoS) policy. The core network may include session management function (Session Management Function, SMF), which completes session management functions such as allocation of an internet protocol (Internet Protocol, IP) address of a UE, selection of a user plane function (User Plane Function, UPF), and control of charging and QoS policies. The core network may include the UPF, which forwards specific user plane data, generates a call detail record based on a traffic status, and functions as a data plane anchor.

The term "user equipment (user equipment, UE)" in embodiments of the present disclosure may represent any terminal device that can perform wired or wireless communication with a network or with a user equipment. For example, a device 101 in FIG. 1, a device 201 in FIG. 2, and a device 301 in FIG. 3 may all be user equipments. The user equipment is a device that has a wireless transceiver function, and may be deployed on the land, including an indoor device, an outdoor device, a handheld device, a wearable device, or a vehicle-mounted device; or may be deployed on a water surface (for example, on a ship); or may be deployed in air (for example, on a plane or a balloon). The user equipment may be a mobile phone, a pad (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The user equipment sometimes may also be referred to as a terminal device, a subscriber unit, an access terminal device, a vehicle-mounted terminal, a terminal in industrial control, a UE unit, a UE station, a mobile station, a remote station, a remote terminal device, a mobile device, a UE terminal device, a terminal device, a wireless communication device, a UE agent, a UE apparatus, a terminal, or the like. The user equipment may be fixed, or may be movable.

The term "network device" in embodiments of the present disclosure may represent an entity or a node that communicates with the user equipment and provides a service for the user equipment. For example, the satellite 110 and a base station 120 in FIG. 1, the satellite 210 and a base station 220 in FIG. 2, and the satellite 310 and a base station 320 in FIG. 3 may all be network devices. The network device may be any satellite base station that has a wireless transceiver function in a satellite network, and includes but is not limited to: an evolved NodeB (evolved NodeB, eNB, or e-NodeB) in long term evolution (Long Term Evolution, LTE), a base station (gNodeB or gNB) or a transmission reception point (Transmission Receiving Point/Transmission Reception Point, TRP) in NR, a subsequently evolved base station in the 3GPP, an access node in a Wi-Fi system, a wireless relay node, a wireless backhaul node, and the like that are carried on a satellite. The satellite base station may be a macro base station, a micro base station, a picocell base station, a small cell, a relay station, or the like. The network device may alternatively be a balloon station, an uncrewed aerial vehicle station, or the like. A plurality of network devices may support networks of a same technology mentioned above, or may support networks of different technologies mentioned above. The plurality of network devices may be network devices of a same type, or may be network devices of different types. The network device may include one or more co-location or non-co-location TRPs. The network device may communicate with the user equipment, or may communicate with the user equipment via the relay station. The user equipment may communicate with a plurality of network devices using different technologies. For example, the user equipment may communicate with a network device that supports and is equipped with an LTE network, or may communicate with a network device that supports and is equipped with a 5G network, or may support dual connectivity with the network device equipped with the LTE network and the network device equipped with the 5G network.

A non-terrestrial network (Non-Terrestrial Network, NTN) is a network in which a radio frequency resource on a platform like a satellite platform, an uncrewed aerial vehicle (Uncrewed Aerial Vehicle, UAV) platform, or a high altitude platform (High Altitude Platform Station, HAPS) is used for a communication service. The satellite platform may include a low earth orbit (Low earth Orbit, LEO), a medium earth orbit (Medium Earth Orbit, MEO), and a geosynchronous orbit (Geosynchronous Orbit, GEO). Compared with a terrestrial cellular network (for example, a 5G NR), the NTN has features such as wider coverage, higher path loss, a larger delay, a higher velocity, and lower costs. As a supplement and extension of a terrestrial network, the NTN may implement wide-area seamless coverage that cannot be implemented by either a wired telephone network or a terrestrial mobile communication network, to effectively resolve an Internet access problem of a region that lacks for a communication infrastructure. For example, when a large quantity of satellites are deployed into the low earth orbit (LEO), constellation construction is performed in an appropriate manner, so that seamless coverage of the ground can be implemented, and round-trip time for data between a satellite and a ground terminal can be greatly reduced, compared with that of a geosynchronous orbit (GEO) satellite, to tens of milliseconds. With the application of technologies such as a high frequency band, a multiple spot beam, and frequency reuse, a communication capability of the satellite is significantly improved, and costs for per unit of broadband are reduced. Therefore, a requirement of a high-information-rate service can be met. Compared with the communication infrastructure, for example, a ground 5G network and a submarine optical fiber cable, the NTN also has a significant cost advantage. Research and development and manufacturing costs for a modern mini satellite are low, and a service life of an in-orbit satellite can be further extended by using a software-defined technology. In addition to a global-mode coverage scenario (for example, a remote region and an ocean-going ship), the NTN may further be used in scenarios such as emergency disaster rescue (for example, disaster monitoring and emergency communication), an internet of everything (IoE), and highvelocity movement (for example, a high-speed train and an airplane). Therefore, widespread attention is attracted from the industry and the academia.

With increasing popularity of research on the NTN, the 3GPP standard organization also carries out standardization research on the NTN and is committed to implementing NTN construction by using an NR system. In the 3GPP, research on satellite-to-ground convergence starts from Release 14 (Release 14, R14), discussion is carried out on a role and an advantage of a satellite in a 5G system, and it is specified that 5G supports satellite access. In R15, a report on a technology of convergence of 5G and the satellite is developed, eight enhanced mobile broadband (enhanced Mobile Broadband, eMBB) scenarios and two massive machine type communication (massive Machine Type Communication, mMTC) scenarios are defined, and an NTN channel model is defined. In R16, research is further carried out on an NTN architecture and a solution that are supported by NR. Based on a research result of R16, in R17, standardization is performed on the NTN supported by 5G NR, and a 1st version of convergence technology specifications is formed. In R18, research will continue to be carried out on NTN enhancement.

Compared with a communication system of the terrestrial network (Terrestrial Network, TN), an NTN system features a high time-frequency offset and a rapid change in the time-frequency offset. A time offset is a time deviation of a same signal between a transmit side and a receive side. The time offset mainly includes a propagation delay, that is, a delay of signal arrival that is caused due to a long propagation distance. A frequency offset is a frequency deviation of a same signal between the transmit side and the receive side. The frequency offset mainly includes a Doppler frequency shift. In other words, when a mobile station moves in a direction at a constant velocity, a change in a phase and a frequency is caused due to a difference in the propagation distance. The time offset and the frequency offset are collectively referred to as the time-frequency offset. A 3.6-GHz frequency is used as an example. A maximum moving velocity of a ground NR system is about 500 km/h, a maximum transmission distance is about 3 km, a maximum Doppler frequency shift is about 1.6 kHz, and a maximum transmission delay is about 10 μs. For an NTN system with an orbit altitude of 600 km, a moving velocity of the satellite is 7.6 km/s, a maximum transmission distance is about 900 km, a maximum Doppler frequency shift is about 70 kHz, and a maximum transmission delay is about 3 ms. A comparison between the two systems shows that the Doppler frequency and the propagation delay of the satellite are far greater than those of the terrestrial system. In addition, because the satellite moves at a high velocity, within 80 ms, a change in the Doppler frequency shift reaches 100 Hz, and a change in the time offset reaches 1.6 $\mu$s. In addition to the Doppler frequency shift and the transmission delay caused by the satellite, nonideal factors such as a terminal movement and a crystal oscillator error between the transmit end and receive end are also important causes of the frequency offset and the time offset.

In a communication system, frequency and time non-alignment of a signal between the transmit side and the receive side is caused due to the frequency offset and the time offset, and communication performance is affected to a great extent. For example, a waveform and modulation related to orthogonal frequency division multiplexing (Orthogonal Frequency Division Multiplexing, OFDM) are used in an NR network. A frequency deviation and a time deviation compromise orthogonality between subcarriers of an OFDM signal, causing inter-symbol interference and inter-carrier interference, thus greatly reducing demodulation performance of OFDM signal data. Therefore, in the NR system, estimation, tracking, and compensation need to be accurately performed on the time-frequency offset, to reduce, to a greatest extent, a time-frequency difference of a signal between the transmit side and the receive side, and ensure system performance. For the NTN system, an absolute value and a change value of the time-frequency offset are 100 times or even 1000 times those of the terrestrial network, which poses a higher requirement for a method for accurate estimation and tracking.

In addition, compared with the terrestrial communication system, the NTN system features a wider coverage area of a single satellite and a larger transmission loss. In the terrestrial system, a maximum of eight synchronization signal blocks (Synchronization Signal Blocks, SSBs) may be used within a frequency range 1 (frequency range 1, FR1), and a maximum of 64 SSBs may be used within a frequency range 2 (frequency range 2, FR2) to cover a service range of a single base station. However, a quantity of SSB beams required for the NTN system may reach a hundred level or even a thousand level. For example, in an NTN system with an orbit altitude of 600 km, a service range of a single satellite can reach hundreds of thousands of square kilometers. To offset a path loss impact caused due to a transmission distance and ensure quality of a communication service, the satellite generally uses a massive antenna array to provide a larger array gain. However, this also results in a narrower main lobe of a beam. For example, a coverage radius of a 3-dB beamwidth is merely a dozen of kilometers, and a coverage area is about hundreds of square kilometers. Then, thousands of beams are required to implement seamless coverage for the service range of the single satellite by using narrow beams. Further, even if a specific spreading process is performed on the beams, hundreds of beams are required to implement coverage to ensure a gain level.

In view of this, embodiments of the present disclosure provide a solution for synchronization. In this solution, the user equipment may determine an offset variation between the user equipment and the network device based on a time-domain delay amount between two reference signals. In this manner, this solution can be used to estimate a time offset variation and/or a frequency offset variation, and therefore system performance can be ensured.

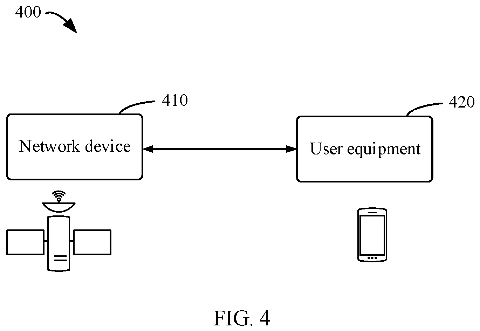

FIG. 4 is a diagram of a system 400 in which an embodiment of the present disclosure may be implemented. A system 400 includes a network device 410 and a user equipment 420. The network device 410 and the user equipment 420 can communicate with each other. For example, the network device 410 can provide a network access service for the user equipment 420.

For example, the network device 410 may directly communicate with the user equipment 420, or may indirectly communicate with the user equipment 420 via another device. For example, multi-hop communication may be performed via one or more other relay (relay) devices. For example, the user equipment 420 may be located in a dual-connectivity scenario, a multi-connectivity scenario, or the like.

It should be understood that the system 400 shown in FIG. 4 is merely an example. Although one network device 410 and one user equipment 420 are shown in the scenario shown in FIG. 4, this is not limited in this embodiment of the present disclosure. For example, the system 400 may include a larger quantity of devices.

It should be understood that this embodiment of the present disclosure can be applied to an NTN system or a TN system. For example, a network device like a satellite base station in the NTN system or a network device like a television signal tower in the TN system has a large coverage range. For example, the coverage may reach hundreds of kilometers, thousands of kilometers, or even a larger range. This is not limited in the present disclosure.

Each embodiment of the present disclosure provides descriptions of a network device and a user equipment. Functions performed by the network device and the user equipment may alternatively be respectively applicable to a chip of the network device and a chip of the user equipment. Optionally, in an open access network (open radio access network, O-RAN) architecture, functions of a physical layer and a medium layer of the network device may be implemented by a distributed unit (DU) of the network device, and functions of a radio link control (RLC) layer, a packet data convergence protocol (PDCP) layer, and a radio resource control (RRC) layer may be implemented by a central unit (CU) of the network device.

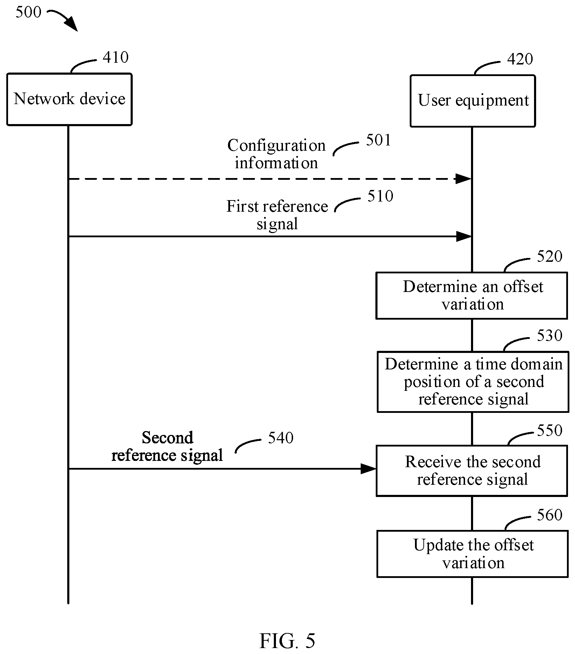

FIG. 5 is a schematic flowchart of interaction in a communication process 500 according to some embodiments of the present disclosure. In FIG. 5, the network device 410 and the user equipment 420 shown in FIG. 4 are used as an example for description.

In 510, the network device 410 sends the first reference signal to the user equipment 420. In 520, the user equipment 420 determines an offset variation between the user equipment 420 and the network device 410 based on the first reference signal. In 530, the user equipment 420 determines a time domain position of a second reference signal based on a time-domain delay amount. In 540, the network device 410 sends the second reference signal to the user equipment 420; and in 550, the user equipment 420 receives the second reference signal based on the time domain position. In 560, the user equipment 420 updates the offset variation between the user equipment 420 and the network device 410 based on the second reference signal. Optionally, a function of sending the first reference signal may be performed by a DU of the network device.

For example, the offset variation between the user equipment 420 and the network device 410 may include a time offset variation and/or a frequency offset variation. For example, the offset variation may be referred to as a time-frequency offset variation or referred to as a time-frequency offset variation for short.

In embodiments of the present disclosure, the term "determining an offset variation" may be used interchangeably with any one of the following: determining a time-frequency offset variation, estimating a time-frequency offset variation, tracking a time-frequency offset variation, updating a time-frequency offset variation, determining a time-frequency offset, measuring a time-frequency offset, tracking a time-frequency offset, estimating a time-frequency offset, and compensating for a time-frequency offset. This is not limited in the present disclosure.

For example, the time-domain delay amount indicates a time-domain delay amount of the second reference signal relative to the first reference signal. Optionally, in 501, the network device 410 may send configuration information to the user equipment 420. For example, the configuration information may indicate the time-domain delay amount. In some examples, the network device 410 may send a radio resource control (Radio Resource Control, RRC) message or RRC signaling to the user equipment 420, and the RRC message or the RRC signaling includes the configuration information. Optionally, sending of the configuration information may be performed by a CU of the network device.

In some implementations of this embodiment of the present disclosure, the first reference signal and the second reference signal are of different types, and cell-level configuration may be performed. For ease of description, in the following embodiments, it is assumed that a type of the first reference signal is an SSB, and a type of the second reference signal is a tracking reference signal (Tracking Reference Signal, TRS). However, it should be understood that, in another embodiment, the first reference signal and the second reference signal may be of other types.

In some embodiments of the present disclosure, the configuration information may indicate a time-domain delay amount of a second signal group relative to a first signal group, and the first signal group and the second signal group have a same coverage range. For example, the first signal group may include one or more SSBs, and the first signal group includes the foregoing first reference signal. For example, the second signal group may include one or more TRSs, and the second signal group includes the foregoing second reference signal. For example, the time-domain delay amount may be represented as OffsetFromSSBtoTRS. Optionally, because the first signal group and the second signal group have a same beam coverage range, the first signal group and the second signal group may also be respectively referred to as a first beam group and a second beam group. This is not limited in the present disclosure. For example, the first signal group may be referred to as an SSB beam group, and the second signal group may be referred to as a TRS beam group.

The network device 410 may send the SSB beam group based on a first transmission periodicity, and each SSB covers a specific ground range. The network device 410 may configure a cell-level TRS, and send the TRS beam group based on a second transmission periodicity. Optionally, the first transmission periodicity may be equal to the second transmission periodicity. Alternatively, optionally, the first transmission periodicity may be not equal to the second transmission periodicity.

For example, a quantity of TRS beams may be the same as a quantity of SSB beams. In this case, each TRS beam corresponds to an SSB beam that has a same coverage range. For example, a quantity of the SSBs in the first signal group is equal to a quantity of the TRSs in the second signal group.

For example, a quantity of TRS beams may be not equal to a quantity of SSB beams. In this case, a plurality of TRSs may be combined into one group, which corresponds to an SSB beam group that includes one or more SSBs and that has a same coverage range. For example, a quantity of the SSBs in the first signal group is not equal to (greater than or less than) a quantity of the TRSs in the second signal group.

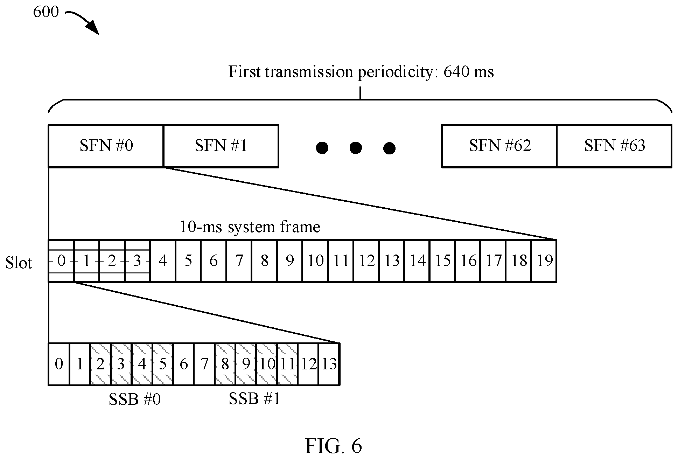

FIG. 6 is a diagram of an SSB sending pattern 600 to which an embodiment of the present disclosure may be applied. As shown in FIG. 6, a maximum of eight SSBs may be sent within first 2 ms of every 20 ms. In this case, a time required by a network device for sending 256 SSBs is 640 ms. In other words, a first transmission periodicity of the SSB may be 640 ms. It should be noted that, for ease of description, in the examples of the present disclosure, it is assumed that the first transmission periodicities of the SSBs are all 640 ms. However, it should be noted that in another scenario, the first transmission periodicity may be another value, for example, 320 ms or 1280 ms. This is not limited in the present disclosure.

As described above, a second transmission periodicity may be equal to the first transmission periodicity, for example, 640 ms. The second transmission periodicity may not be equal to the first transmission periodicity. For example, the second transmission periodicity may be equal to 320 ms or 1280 ms.

A network device 410 may pair an SSB beam group and a TRS beam group that have a same coverage range. For example, the network device 410 may configure a time domain position of each TRS by using, for example, an RRC message or RRC signaling. For example, the network device 410 may define a pairing relationship between the SSB beam group and the TRS beam group based on a quasi co-location (Quasi Co-Location, QCL) relationship.

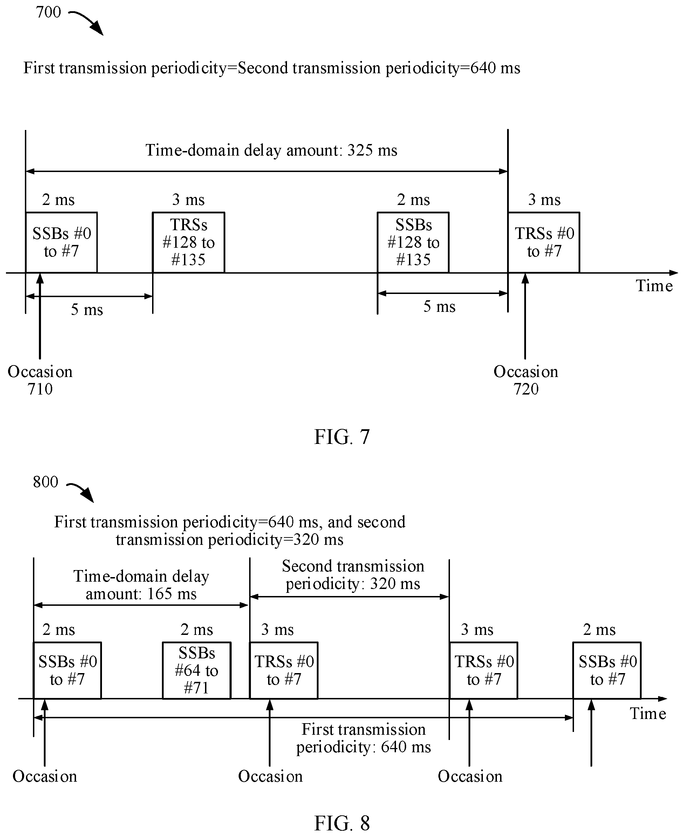

The network device 410 may send, at different time, the TRS beam group and the SSB beam group that are paired with each other, for example, cause a time interval for transmitting the TRS beam group and the SSB beam group that are paired with each other to be the foregoing time-domain delay amount. For example, the time-domain delay amount may be determined based on a half of the second transmission periodicity (1/2 of a TRS periodicity), 1/4 of the second transmission periodicity (1/4 of the TRS periodicity), or another value. Optionally, the time-domain delay amount is further determined based on transmission duration of a first signal group. For example, the transmission duration of the first signal group may indicate total duration required for transmission of signals in the first signal group. For example, in the examples shown in FIG. 7 to FIG. 9, the first signal group includes eight SSBs, and the transmission duration of the first signal group (that is, one SSB beam group, for example, SSBs #0 to #7) is 5 ms.

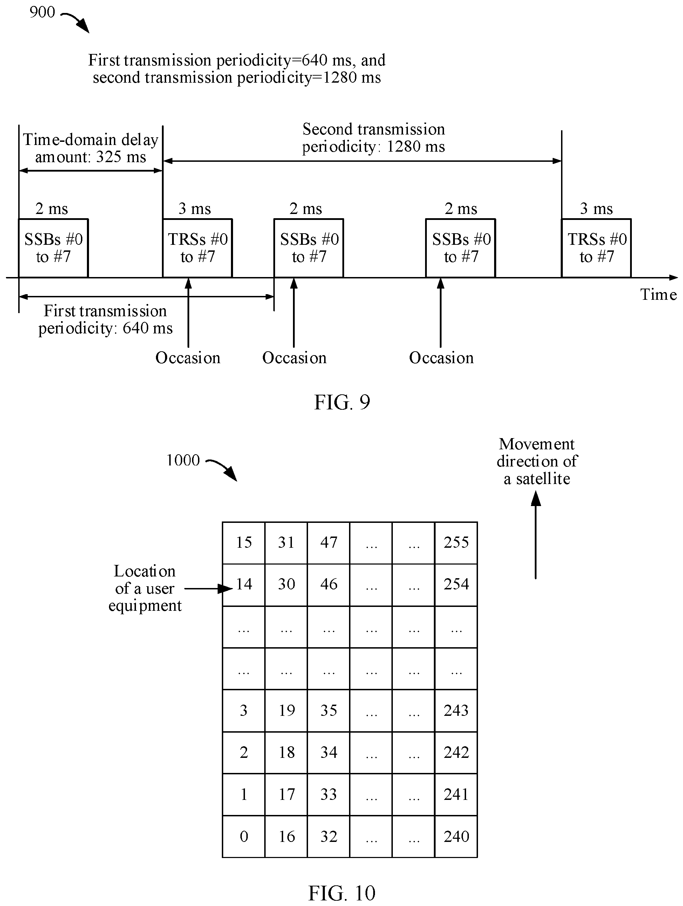

For example, it is assumed that the first signal group includes eight SSBs, a second signal group includes eight TRSs, and the first transmission periodicity is 640 ms. FIG. 7 is a diagram 700 in which a second transmission periodicity is 640 ms and a time-domain delay amount is 325 ms. FIG. 8 is a diagram 800 in which a second transmission periodicity is 320 ms and a time-domain delay amount is 165 ms. FIG. 9 is a diagram in which a second transmission periodicity is 1280 ms and a time-domain delay amount is 325 ms. In FIG. 7 to FIG. 9, transmission duration of one SSB beam group is 5 ms. Therefore, the time-domain delay amount is equal to 1/2 or 1/4 of the second transmission periodicity (for example, 320 ms in FIG. 7 and FIG. 9 or 160 ms in FIG. 8) + the transmission duration of one SSB beam group.

FIG. 7 is used as an example. A TRS beam group (TRSs #0 to #7) that is paired with an SSB beam group (SSBs #0 to #7) is configured after SSBs #128 to #135, so that there is a time interval of 325 ms (that is, the time-domain delay amount) between the TRS beam group and the SSB beam group. In this way, a user equipment 420 may determine, based on a received SSB, a time-frequency offset change on an updating occasion 710, and determine, based on a received TRS, a time-frequency offset change on an updating occasion 720. For example, the user equipment 420 may receive the SSB #1 on the updating occasion 710, then the user equipment 420 may receive, based on the time-domain delay amount (325 ms), the TRS #1 on the updating occasion 720. In this way, it can be ensured that within a first transmission periodicity (640 ms), the user equipment 420 determines, respectively based on an SSB and a TRS, a time-frequency offset change on two occasions, and separately performs time-frequency offset estimation and tracking on the two occasions. It may be understood that cases in FIG. 8 and FIG. 9 are similar. To avoid repetition, details are not described herein again.

In some examples, it is assumed that a network device 410 is moving, for example, the network device 410 is a satellite base station. In this case, in consideration of satellite movement, for the user equipment 420, a to-be-measured SSB may change with time, and correspondingly, a to-be-measured TRS also changes.

FIG. 10 shows an example 1000 of a change that is caused in an SSB measured by a user equipment 420 and that is caused due to movement of a network device 410. Refer to FIG. 10. It is assumed that the user equipment 420 is initially located at a position of an SSB #14. As the network device 410 (for example, a satellite) quickly moves upward, a to-be-measured SSB of the user equipment 420 changes from the SSB #14 to an SSB #13, an SSB #12, or the like. Because there is a pairing relationship between a TRS beam group and an SSB beam group, a to-be-measured TRS of the user equipment also changes accordingly. In some examples, the network device 410 may indicate, based on another RRC message or other RRC signaling, a change in the to-be-measured SSB/TRS of the user equipment 420.

In some embodiments of the present disclosure, configuration information may indicate a time-domain delay amount of a second signal group relative to a first signal group and a signal measurement window. The first signal group and the second signal group have a same coverage range, and the signal measurement window may indicate a time domain range (or duration) that the second signal group is in. For example, the time-domain delay amount may be represented as OffsetFromSSBtoTRS, and the signal measurement window may be represented as TRSwindow. For example, the first signal group may be referred to as an SSB beam group, and the second signal group may be referred to as a TRS signal group. In this manner, the signal measurement window may indicate duration within which the user equipment 420 continuously measures a TRS, so that the network device 410 does not need to frequently indicate the change in the to-be-measured TRS of the user equipment 420, thereby reducing indication overheads and reconfiguration overheads.

Optionally, the network device 410 may determine duration of the signal measurement window based on a moving velocity of the network device 410 and/or another factor. For example, the signal measurement window is 3 ms, 6 ms, or another value. This is not limited in the present disclosure.

For example, the user equipment 420 may detect the TRS within the duration indicated by the signal measurement window, where a start point of the signal measurement window is determined based on time for receiving an SSB and a time-domain delay amount. For example, the user equipment 420 may determine a time range used to detect the TRS. For the time range, a time-domain delay amount after a reception time domain position of the SSB is used as a start point and the signal measurement window is used as a time length.

The user equipment 420 may detect one or more TRSs within the time range, and may determine a time-frequency offset variation based on at least one of the one or more TRSs. Optionally, if only one TRS is detected within the time range, the time-frequency offset variation may be determined based on the detected TRS.

Optionally, if a plurality of TRSs are detected within the time range, one TRS may be selected from the plurality of TRSs, and then the time-frequency offset variation is determined based on the selected TRS. For example, for the plurality of detected TRSs, the selected TRS may be determined based on signal parameters of the plurality of TRSs. For example, a TRS with a signal parameter with a largest value may be selected, where the signal parameter may be a signal strength, signal quality, a signal-to-noise ratio, or the like.

Optionally, if a plurality of TRSs are detected within the time range, at least one TRS may be selected from the plurality of TRSs, and then the time-frequency offset variation is determined based on the selected at least one TRS. For example, for the plurality of detected TRSs, the selected TRS may be determined based on signal parameters of the plurality of TRSs. For example, at least one TRS whose signal parameter exceeds a threshold may be selected, where the signal parameter may be a signal strength, signal quality, a signal-to-noise ratio, or the like.

For example, refer to FIG. 7. It is assumed that a signal measurement window is 3 ms. If the user equipment 420 may receive the SSB#1 on the updating occasion 710, the user equipment 420 may perform detection based on the time-domain delay amount (325 ms) and the signal measurement window (3 ms) within a transmission time range of the TRSs #0 to #7. For example, if the user equipment 420 detects the TRS#0 that is on the updating occasion 720, the user equipment 420 may determine an updated time-frequency offset variation based on the TRS#0.

In some embodiments of the present disclosure, the user equipment 420 may further determine a time-frequency offset value based on location information of the network device 410 and location information of the user equipment 420. For example, a first part of a time-frequency offset variation is determined based on the location information, and a second part of the time-frequency offset variation is determined based on a first reference signal or a second reference signal.

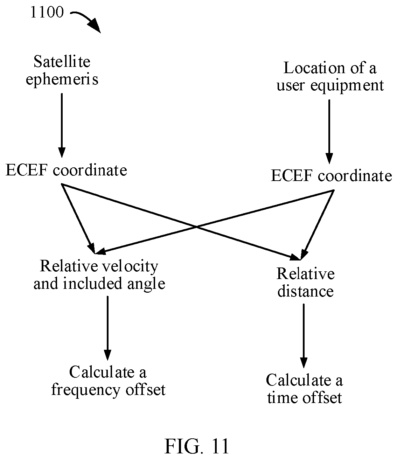

For example, it is assumed that the network device 410 is an ephemeris base station, the location information of the network device 410 may be included in ephemeris information. FIG. 11 is a diagram 1100 of determining a first part of a time-frequency offset variation based on location information. For example, a time offset and a frequency offset may be determined according to the following formulas (1) and (2):

$$\tau = \frac{\Delta d}{c} \qquad\qquad (1)$$

$$F_d = \frac{f_0 \cdot \Delta V \cdot cos\, \alpha}{c} \qquad\qquad (2)$$

In the formulas (1) and (2), $f_0$ is a carrier frequency, $\Delta V$ is a relative velocity between a satellite and a user equipment, $\alpha$ is an included angle of connection lines between the satellite and the user equipment, $c$ is a velocity of light, and $\Delta d$ is a relative distance between the satellite and the user equipment.

Optionally, a second part of the time-frequency offset variation may be understood as a residual time-frequency offset variation caused due to a calculation error, a movement of the user equipment, a non-rational factor, or the like. Based on the foregoing record, the residual time-frequency offset variation may be estimated and updated based on an SSB or a TRS. Optionally, the second part of the time-frequency offset variation may be less than the first part of the time-frequency offset variation. For example, an order of magnitude of the second part may be smaller than an order of magnitude of the first part, or a granularity of the second part is finer than a granularity of the first part.

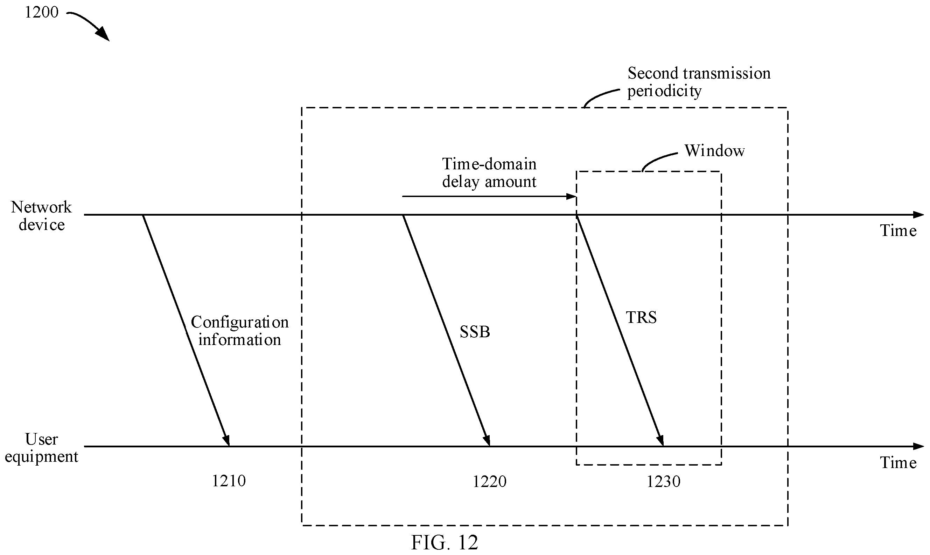

FIG. 12 is a diagram of determining an offset variation 1200 according to some example embodiments of the present disclosure. Optionally, configuration information may include location information of a network device 410, a time-domain delay amount, and a signal measurement window. Correspondingly, a user equipment 420 may determine, at a location 1210, a first part of the offset variation based on the location information. The user equipment 420 may determine, at the location 1220, a second part of the offset variation based on a received SSB. The user equipment 420 may detect and receive a TRS based on the time-domain delay amount and the signal measurement window. Further, the second part of the offset variation may be updated at a location 1230.

Refer to FIG. 12. Within a second transmission periodicity, there are at least two occasions for the user equipment 420 to determine the second part of the offset variation.

In addition or optionally, the user equipment 420 may further perform time-frequency offset compensation on another reference signal and/or other data based on the determined offset variation, where the another reference signal and/or the other data may include but are/is not limited to: a demodulation reference signal (Demodulation Reference Signal, DMRS), a signal or data received via a physical downlink control channel (Physical Downlink Control Channel, PDCCH) or a physical downlink shared channel (Physical Downlink Shared Channel, PDSCH), and the like.

A quantity of occasions for determining a time-frequency offset variation based on this solution may be compared with a quantity of occasions for determining a time-frequency offset variation merely based on a TRS in an existing solution.

Table 1 shows a comparison result. It can be learned that for different transmission periodicities (a first transmission periodicity and the second transmission periodicity), quantities of occasions within same duration (for example, 640 ms) increase by 50%, 100%, and 200% respectively.

Table 1

| TRS/SSB transmission periodicity (ms) | 320/640 | 640/640 | 1280/640 |
|---|---|---|---|
| Quantity of occasions for being merely based on a TRS/640 ms | 2 | 1 | 0.5 |
| Quantity of occasions in this solution/640 ms | 3 | 2 | 1.5 |
| Increase of the quantity of occasions | 50% | 100% | 200% |

In the implementation described above, the network device may pair, based on a beam direction, a TRS and an SSB that are configured at a cell level, so that a TRS beam group and an SSB beam groups that have a same coverage range are sent, based on the time-domain delay amount, at different time, and a quantity of occasions for the user equipment to determine a time-frequency offset variation within the second transmission periodicity is increased. In this way, a problem of excessively large resource overheads caused by performing time-frequency offset estimation merely based on a TRS and a problem of low time-frequency offset tracking capability caused by performing time-frequency offset estimation merely based on location information can be resolved.

In some implementations of this embodiment of the present disclosure, a first reference signal and a second reference signal are of different types, and user-level configuration may be performed. For ease of description, in the following embodiments, it is assumed that the type of the first reference signal is an SSB, and the type of the second reference signal is a TRS. However, it should be understood that, in another embodiment, the first reference signal and the second reference signal may be of other types.

It may be understood that, for a specific user (or the user equipment 420), a time domain position of a to-be-measured TRS of the specific user (or the user equipment 420) is relatively fixed, and the TRS uses a narrow beam to point to a single to-be-served user equipment or a plurality of user equipments in a single region. Therefore, in some implementations, the network device 410 may pair a TRS configured at a user level with a corresponding SSB.

In some examples, the network device 410 may determine the time domain position of the to-be-measured TRS of the user equipment 420, for example, may determine the time domain position based on location information of the user equipment 420. Optionally, the time domain position of the to-be-measured TRS of the user equipment 420 is time domain information of a user-level TRS associated with the user equipment 420, or is referred to as a user-level TRS for short. In some examples, the network device 410 may determine one or more potential to-be-measured SSBs of the user equipment 420, and may pair the one or more potential to-be-measured SSBs with the user-level TRS, and notify the user equipment 420 of pairing information.

In some examples, the configuration information may include the user-level TRS and the pairing information. It may be understood that the user equipment 420 may determine a time domain position of the user-level TRS, for example, the time domain position is included in the configuration information. It may be understood that because the SSB is sent periodically, a time domain position of the one or more potential to-be-measured SSBs is determined. In this case, the user equipment 420 may determine the time domain position of the one or more potential to-be-measured SSBs based on the pairing information. It may be understood that there is a specific time interval, that is, the foregoing time-domain delay amount, between the time domain position of the one or more potential to-be-measured SSBs and the time domain position of the user-level TRS. In other words, for the user equipment 420, the configuration information may indicate, based on the user-level TRS and the pairing information, a time-domain delay amount of a second signal group (for example, the user-level TRS) relative to a first signal group (for example, the one or more potential to-be-measured SSBs).

For example, the network device 410 may determine a potential to-be-measured SSB beam (or SSB beam group) of the user equipment 420 based on a coverage range of an SSB in which the user equipment 420 is currently located and movement information of the network device 410 and/or the user equipment 420. For example, the network device 410 may configure the time domain position of the user-level TRS of the user equipment 420 to be a location that has an interval of the time-domain delay amount after the potential to-be-measured SSB beam (or the SSB beam group). For example, the network device 410 may configure a pairing relationship between a user-level TRS and a potential to-be-measured SSB beam (or the SSB beam group).

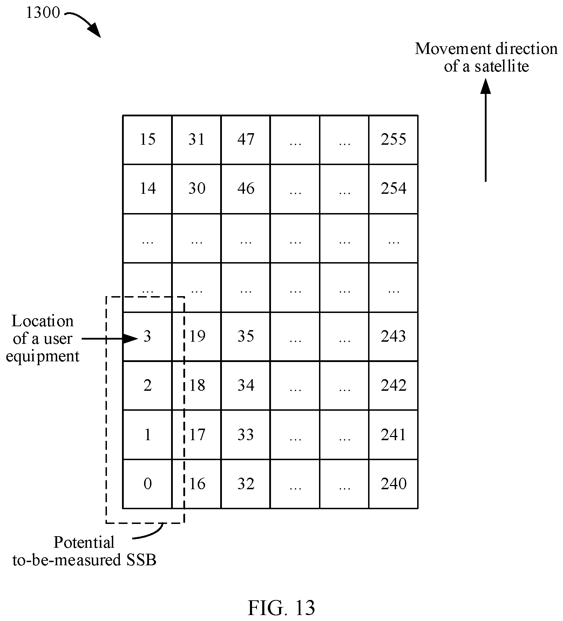

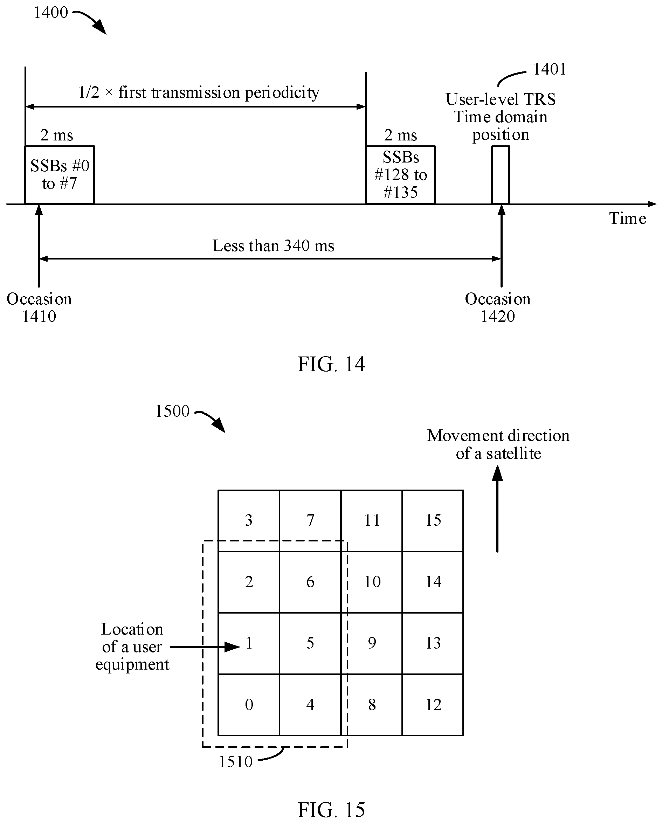

FIG. 13 shows an example 1300 of a change that is caused in an SSB measured by a user equipment 420 and that is caused due to movement of a network device 410. Refer to FIG. 13. It is assumed that the user equipment 420 is currently in a coverage range of an SSB #3, and as a satellite moves, the user equipment 420 may be subsequently in a coverage range of SSBs #2 to #0. In this case, the network device 410 may determine a potential to-be-measured SSB beam group (that is, SSBs #3 to #0) of the user equipment 420. FIG. 14 is a diagram 1400 of determining an offset variation according to some example embodiments of the present disclosure. A network device 410 may configure a time domain position of a user-level TRS of a user equipment 420 after SSBs #128 to #135. In this manner, within a second transmission periodicity of 640 ms, a time interval between an occasion 1420 for determining a time-frequency offset variation based on a TRS and an occasion 1410 for determining a time-frequency offset variation based on an SSB (the potential to-be-measured SSB beam group SSBs #3 to #0) is maintained, for example, is maintained between 320 ms and 340 ms.

For example, the network device 410 may indicate a pairing relationship to the user equipment 420 based on a QCL relationship.

Optionally, the network device 410 may configure a plurality of sets of TRS resources (also referred to as a plurality of TRS resource sets) and a plurality of corresponding TCI statuses by using RRC signaling or the like. For example, the configuration information mentioned above may include the plurality of sets of TRS resources and the plurality of TCI statuses, where the plurality of TRS resources have a same time domain position, and the TCI statuses are different. A QCL relationship in each TCI status may indicate an SSB paired with a TRS. With reference to the example in FIG. 13, the configuration information may indicate four TCI statuses and corresponding TRS resource sets, and a QCL relationship in one TCI status may indicate that SSBs paired with the TRS are SSBs #0 to #3. Optionally, when the user equipment 420 is within a beam coverage range of an SSB (for example, the SSB #2) in the SSBs #0 to #3, the network device 410 may activate or indicate, based on a MAC CE or DCI, a TCI status including the SSB (for example, the SSB #2). Further, the user equipment 420 may determine, based on the MAC CE or the DCI, a QCL relationship in the activated or indicated TCI status. For example, the QCL relationship indicates a pairing relationship between the SSB (for example, the SSB #2) and a previously configured TRS. Optionally, the previously configured TRS is a user-level TRS, that is, the foregoing second reference signal, and an SSB (for example, the SSB #2) that has a pairing relationship with the user-level TRS is the foregoing first reference signal.

Optionally, the network device 410 may configure only one set of TRS resources (also referred to as one TRS resource set) by using RRC signaling or the like, without establishing association with a TCI status. Optionally, the network device 410 may determine a specific TRS based on location information of the user equipment 420, for example, a TRS beam direction with a signal parameter with a largest value, that is, the foregoing second reference signal. Then, the network device 410 may configure the specific TRS as a user-level TRS corresponding to the user equipment 420. Optionally, during RRM measurement or beam management, the user equipment 420 may determine an SSB with a signal parameter with a largest value (for example, exceeding a preset threshold), that is, the foregoing first reference signal.

As shown in FIG. 14, the network device 410 may configure a time domain position 1401 of the user-level TRS, and the network device 410 may further cause, based on the activated or indicated TCI status or the like, the user equipment 410 to determine an SSB that is paired with the configured user-level TRS. Then, the user equipment 420 may determine the time-frequency offset variation at the occasion 1410 based on the SSB, and update the time-frequency offset variation on the occasion 1420 based on the TRS. For example, the network device 410 may configure the user-level TRS after the SSBs #128 to #135. Correspondingly, a time interval between the occasion 1410 and the occasion 1420 does not exceed 340 ms.

For example, the network device 410 may further reconfigure a time domain position of the user-level TRS for the user equipment 420. Optionally, if a time interval between the previously configured time domain position of the TRS and a time domain position of a paired SSB is less than a duration threshold (for example, 320 ms or another value), the network device 420 may reconfigure a time domain position of the user-level TRS for the user equipment 410. For example, the reconfigured time domain position of the TRS may be sent by the network device 410 to the user equipment 420 based on other RRC signaling. Optionally, a time interval between the time domain position of the reconfigured TRS and the time domain position of the paired SSB exceeds the duration threshold (for example, 320 ms or another value), and optionally, the time interval between the time domain position of the reconfigured TRS and the time domain position of the paired SSB is less than another duration threshold (for example, 340 ms or another value), where the another duration threshold is greater than the duration threshold.

In some embodiments of the present disclosure, the user equipment 420 may further determine a time-frequency offset value based on location information of the network device 410 and location information of the user equipment 420. For example, a first part of a time-frequency offset variation is determined based on the location information, and a second part of the time-frequency offset variation is determined based on a first reference signal or a second reference signal. For detailed descriptions of the first part and the second part, refer to the embodiments described above. To avoid repetition, details are not described herein again.

In addition or optionally, the user equipment 420 may further: perform time-frequency offset compensation on another reference signal and/or other data based on the determined offset variation, where the another reference signal and/or the other data may include but are/is not limited to: a DMRS, a signal or data received via a PDCCH or a PDSCH, and the like.

In the implementations described above, the network device may configure a user-level TRS for the user equipment, so that the user-level TRS may be paired with one or more potential to-be-measured SSBs. For example, the pairing relationship may be indicated based on a QCL relationship. In addition, a time interval between the one or more paired potential to-be-measured SSBs and the user-level TRS that are paired with each other is less than a second transmission periodicity, so that a quantity of occasions for the user equipment to determine a time-frequency offset variation within the second transmission periodicity is increased. In this way, a problem of excessively large resource overheads caused by performing time-frequency offset estimation merely based on a TRS and a problem of low time-frequency offset tracking capability caused by performing time-frequency offset estimation merely based on location information can be resolved, and performance deterioration caused due to inaccurate time-frequency offset estimation can be avoided.

In some implementations of embodiments of the present disclosure, the first reference signal and the second reference signal are of a same type, and the first reference signal and the second reference signal have adjacent beam coverage ranges. For ease of description, in the following embodiments, it is assumed that the type of the first reference signal and the type of the second reference signal are both the TRS. However, it should be understood that, in another embodiment, the first reference signal and the second reference signal may be of other types.

In some embodiments, the network device 410 may configure a cell-level TRS, and may send, at an interval based on a time-domain delay amount, two TRSs that have adjacent beam coverage ranges. For example, the network device 410 may determine a pattern of sending a TRS, so that an interval between different TRSs having adjacent beam coverage ranges is less than the second transmission periodicity. For example, the network device 410 may send a first TRS at a first moment, and send a second TRS after the time-domain delay amount, and the first TRS and the second TRS have adjacent beam coverage ranges. Correspondingly, the user equipment 420 may receive the first TRS at the first moment, and determine a time-frequency offset variation. Then, the user equipment 420 may receive the second TRS after the time-domain delay amount of the first moment, and re-determine a time-frequency offset variation. Because the time-domain delay amount is less than a TRS transmission periodicity (that is, the second transmission periodicity), the user equipment 420 may obtain more occasions for determining the time-frequency offset variation.

It may be understood that, considering that generally, an SSB beam is wide, and a signal-to-noise ratio (signal-to-noise ratio, SNR) of a region at a beam center is high, sufficient estimation accuracy can be ensured. However, an SNR of a region at a beam edge is low, and sufficient estimation accuracy may not be ensured, but an SSB within a coverage range of an adjacent beam can be received. For an SSB beam and a TRS beam that have a same received SNR, because estimation precision may be higher for a TRS, the user equipment may obtain, within one TRS transmission periodicity (that is, the second transmission periodicity), a plurality of occasions for determining a time-frequency offset variation based on a TRS beam that covers the user equipment and one or more TRS beams that cover adjacent beam ranges.

FIG. 15 is a diagram 1500 in which 16 TRSs are used as an example. It is assumed that a user equipment is located within a beam coverage range of a TRS #1. For example, it may be determined that TRSs in adjacent coverage ranges 1510 include a TRS #0, a TRS #2, and TRSs #4 to #6.

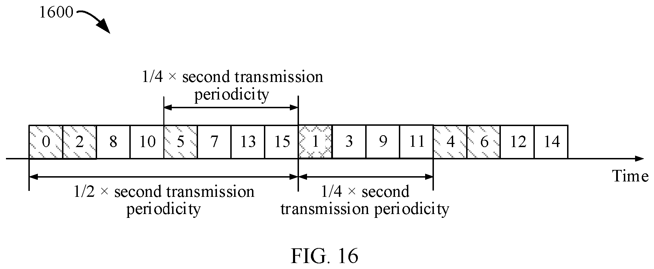

For example, a network device may configure a time domain position of a TRS as shown in FIG. 16. In a TRS transmission sequence 1600 shown in FIG. 16, an interval between the TRS #0/2 and the TRS #1 is about 1/2 of a second transmission periodicity, an interval between the TRS #5 and the TRS #1 is about 1/4 of the second transmission periodicity, and an interval between the TRS #4/6 and the TRS #1 is about 1/4 of the second transmission periodicity. In this manner, the user equipment can obtain, within the second transmission periodicity, at least two occasions for determining a time-frequency offset variation.

In some embodiments, a network device 410 may configure a plurality of sets of TRS resources (also referred to as a plurality of TRS resource sets) and a plurality of corresponding TCI statuses by using RRC signaling or the like. For example, the configuration information mentioned above may include the plurality of sets of TRS resources and the plurality of TCI statuses.

For example, when the user equipment is located within a beam coverage range of a TRS (for example, the TRS #1 in FIG. 15), the network device 410 may activate or indicate, based on a MAC CE or DCI, at least two TCI statuses that correspond to the TRS (for example, the TRS #1 in FIG. 15) in which the user equipment is located. For example, the at least two TCI statuses that are activated or indicated may correspond to the TRS (for example, the TRS #1 in FIG. 15) in the beam coverage range in which the user equipment is located and a TRS (for example, the TRS #0, the TRS #2, and the TRSs #4 to #6) located within adjacent beam coverage ranges.

For example, the user equipment 420 may determine at least two to-be-measured TRSs based on the at least two TCI statuses that are activated or indicated. Further, the user equipment 420 may determine time domain resources of the at least two TRSs based on the configuration information, and receive the at least two TRSs on the corresponding time domain resources.

Optionally, the user equipment 420 may separately determine a time-frequency offset variation based on each of the at least two received TRSs. Optionally, the user equipment 420 may select a part of TRSs from the at least two received TRSs, and separately determine a time-frequency offset variation. For example, a part of TRSs whose SNRs exceed a preset SNR threshold may be selected, that is, an SNR of each of the selected part of TRSs exceeds the preset SNR threshold.

In some embodiments of the present disclosure, the user equipment 420 may further determine a time-frequency offset value based on location information of the network device 410 and location information of the user equipment 420.

For example, a first part of a time-frequency offset variation is determined based on the location information, and a second part of the time-frequency offset variation is determined based on a first reference signal or a second reference signal. For detailed descriptions of the first part and the second part, refer to the embodiments described above. To avoid repetition, details are not described herein again.

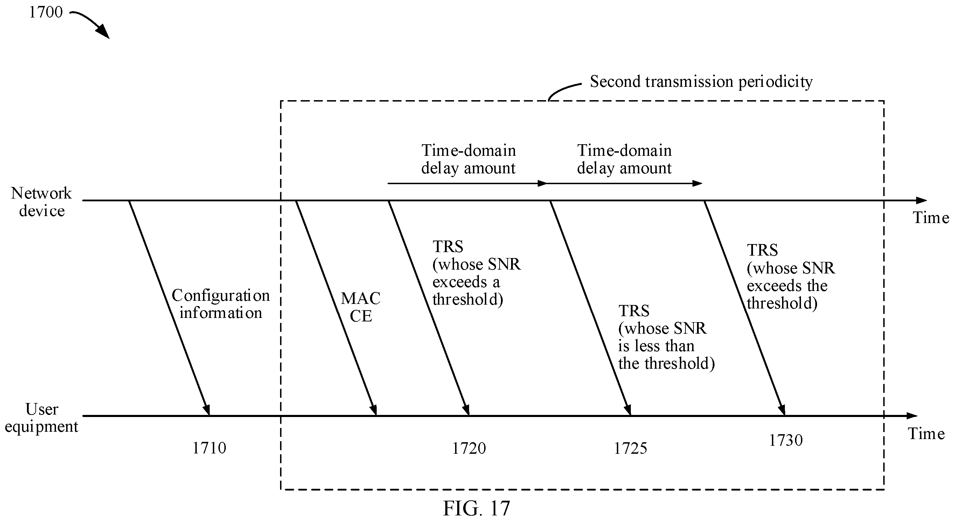

FIG. 17 is a diagram of determining an offset variation 1700 according to some example embodiments of the present disclosure. Optionally, configuration information may include location information of a network device 410, for example, the location information is included in ephemeris information. Optionally, the configuration information may include a plurality of sets of TRS resources and a plurality of corresponding TCI statuses. Optionally, the network device 410 may send a MAC CE to a user equipment 420 based on a TRS in which the user equipment 420 is located, to activate the at least two TCI statuses.

Correspondingly, the user equipment 420 may determine, at a location 1710, a first part of the offset variation based on the location information. The user equipment 420 may determine, at a location 1720, a second part of the offset variation based on a received TRS (whose SNR exceeds a preset SNR threshold). The user equipment 420 may update, at a location 1730, the second part of the offset variation based on another received TRS (whose SNR exceeds the preset SNR threshold).

In addition, optionally, because an SNR of a TRS received by the user equipment 420 at a location 1725 between the location 1720 and the location 1730 is lower than the preset SNR threshold, the second part of the offset variation is not updated at the location 1725.

Refer to FIG. 17. Within a second transmission periodicity, there are at least two occasions for the user equipment 420 to determine the second part of the offset variation.

In addition or optionally, the user equipment 420 may further: perform time-frequency offset compensation on another reference signal and/or other data based on the determined offset variation, where the another reference signal and/or the other data may include but are/is not limited to: a DMRS, a signal or data received via a PDCCH or a PDSCH, and the like.

In the implementation described above, the network device may send, based on a time-domain delay amount and at different time, different TRSs located within adjacent beam coverage ranges. In this way, the user equipment can obtain at least two occasions for determining the time-frequency offset variation within the second transmission periodicity, without increasing TRS resource overheads of the network device. Therefore, the user equipment can update the time-frequency offset variation in a more timely manner, thereby avoiding deterioration of data transmission performance.

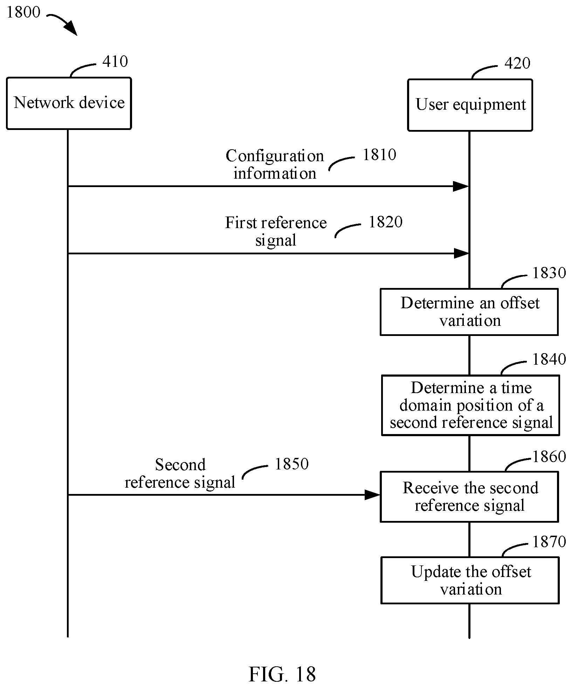

Further, FIG. 18 is a schematic flowchart of interaction in a communication process 1800 according to some embodiments of the present disclosure. FIG. 18 relates to the network device 410 and the user equipment 420 shown in FIG. 4.

In 1810, the network device 410 sends configuration information to the user equipment 420, where the configuration information may indicate a pairing relationship between a first-type signal and a second-type signal, and a time-domain delay amount between a first reference signal in the first-type signal and a second reference signal in the second-type signal that have a pairing relationship is a fixed value. For example, the fixed value may be less than a transmission periodicity (a first transmission periodicity) of the first reference signal. For example, the fixed value may be less than a transmission periodicity (a second transmission periodicity) of the second reference signal. Optionally, each reference signal in the first-type signal has the first transmission periodicity, and each reference signal in the second-type signal has the second transmission periodicity. Optionally, the first transmission periodicity and the second transmission periodicity may be equal or unequal. This is not limited in the present disclosure. For example, assuming that the configuration information indicates that there is a pairing relationship between the first reference signal in the first-type signal and the second reference signal in the second-type signal, a time-domain delay amount of the second reference signal relative to the first reference signal is a fixed value. For example, the first reference signal and the second reference signal may have a same beam coverage range. For example, the configuration information may further indicate a time domain position of each reference signal in the first-type signal. For example, the configuration information may further indicate a time domain position of each reference signal in the second-type signal.

In 1820, the network device 410 sends the first reference signal to the user equipment 420. In 1830, the user equipment 420 determines an offset variation between the user equipment 420 and the network device 410 based on the first reference signal. In 1840, the user equipment 420 determines, based on the configuration information, a time domain position of the second reference signal that is paired with the first reference signal.

In 1850, the network device 410 sends the second reference signal to the user equipment 420; and in 1860, the user equipment 420 receives the second reference signal based on the time domain position. In 1870, the user equipment 420 updates the offset variation between the user equipment 420 and the network device 410 based on the second reference signal.

For example, the offset variation between the user equipment 420 and the network device 410 may include a time offset variation and/or a frequency offset variation. For example, the offset variation may be referred to as a time-frequency offset variation or referred to as a time-frequency offset variation for short.

In embodiments of the present disclosure, the term "determining an offset variation" may be used interchangeably with any one of the following: determining a time-frequency offset variation, estimating a time-frequency offset variation, tracking a time-frequency offset variation, updating a time-frequency offset variation, determining a time-frequency offset, measuring a time-frequency offset, tracking a time-frequency offset, estimating a time-frequency offset, and compensating for a time-frequency offset. This is not limited in the present disclosure.

In some embodiments, the first-type reference signal and the second-type reference signal are an SSB and a TRS respectively, for example, may be a cell-level SSB beam and a cell-level TRS beam respectively. For example, the network device 410 may determine a fixed value. For example, the fixed value may be equal to 1/2 of the first transmission periodicity (or the second transmission periodicity), 1/4 of the first transmission periodicity (or the second transmission periodicity), or another value.

For example, the network device 410 may configure a plurality of sets of TRS resources (also referred to as a plurality of TRS resource sets) and a plurality of corresponding TCI statuses in a manner, for example, based on RRC signaling. For example, the configuration information mentioned above may include the plurality of sets of TRS resources and the plurality of TCI statuses. For example, a QCL relationship in a TCI status may indicate a pairing relationship between the SSB and the TRS. For example, assuming that an SSB #0 is paired with an TRS #0, the following Table 2 shows configuration information associated with the pairing relationship.

Table 2

```
QCL-info:
        TCI-state : : = {
                tci-StateID  #0,
                qcl-Type1   QCL-Info
}
QCL-Info : : ={
        Cell     ServCellIndex
        bwp-Id    BWP-Id
        referenceSignal   {
                ssb      SSB beam #0
        },
        qcl-Type   typeC
}
```

In this way, after receiving the configuration information, the user equipment 420 may determine a pairing relationship between the SSB #0 and the TRS #0, and a QCL type (qcl-Type) is a type C (typeC).

For example, the network device 410 may further send a MAC CE or DCI to the user equipment 420, to activate or indicate at least one TCI status of a plurality of TCIs. Optionally, when the user equipment 420 is located within a beam coverage range of a specific SSB or a specific TRS, the network device 410 may activate or indicate, based on the MAC CE or the DCI, at least one TCI status associated with the specific SSB or the specific TRS.

For example, the user equipment 420 may determine, based on the MAC CE or the DCI, the at least one TCI status that is activated or indicated, to determine the pairing relationship indicated by the QCL relationship in the at least one TCI status. In an example, it is assumed that the user equipment 420 determines that the pairing relationship that is activated or indicated is a pairing relationship between an SSB #1 and a TRS #1. In this case, the user equipment 420 may determine, based on the configuration information, a first time domain position of the SSB #1 and a second time domain position of the TRS #1, so that a time-frequency offset variation can be determined based on the SSB #1 received at the first time domain position, and a time-frequency offset variation can be determined based on the TRS #1 received at the second time domain position. Because the configuration information indicates that a time-domain delay amount (a time interval) between two reference signals (for example, the SSB #1 and the TRS #1) that are paired with each other is a fixed value, and the fixed value is less than the first transmission periodicity (and/or the second transmission periodicity), there are more than one occasion for the user equipment to determine the time-frequency offset variation within the first transmission periodicity (and/or the second transmission periodicity).

In some embodiments, if the beam coverage range within which the user equipment 420 is located changes due to movement of the network device 410 or the user equipment 420 or for another reason, the network device 410 may activate or indicate another TCI status based on another MAC CE or another piece of DCI. Because a time-domain delay amount between each first reference signal and each second reference signal that are in the configuration information and that are paired with each other is a fixed value, it can be learned that even if an SSB/a TRS actually received by the user equipment 420 changes, the user equipment 420 determines that an updating periodicity of the time-frequency offset variation may basically remain unchanged. In this way, universality of this solution can be ensured.

In some embodiments of the present disclosure, the user equipment 420 may further determine a time-frequency offset value based on location information of the network device 410 and location information of the user equipment 420. For example, a first part of a time-frequency offset variation is determined based on the location information, and a second part of the time-frequency offset variation is determined based on a first reference signal or a second reference signal. For detailed descriptions of the first part and the second part, refer to the embodiments described above. To avoid repetition, details are not described herein again.

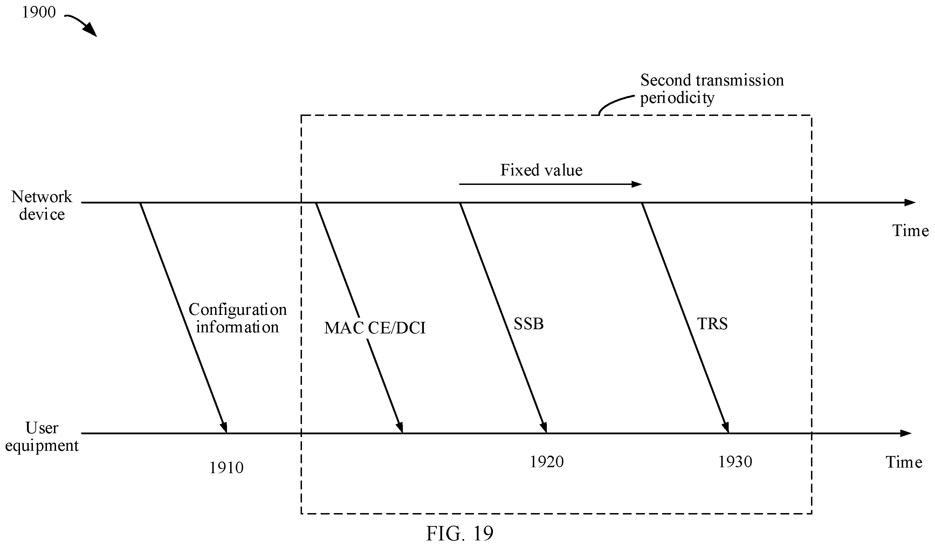

FIG. 19 is a diagram of determining an offset variation 1900 according to some example embodiments of the present disclosure. Optionally, configuration information may include location information of a network device 410, for example, the location information is included in ephemeris information. Optionally, the configuration information may include a plurality of sets of TRS resources and a plurality of corresponding TCI statuses. In addition, a time-domain delay amount between a first reference signal and a second reference signal that are paired with each other and that are indicated by a QCL relationship in a TCI status is a fixed value. Optionally, the network device 410 may send a MAC CE or DCI to a user equipment 420 based on an SSB or a TRS in which the user equipment 420 is located, to activate or indicate at least one TCI status.

Correspondingly, the user equipment 420 may determine, at a location 1910, a first part of the offset variation based on the location information. The user equipment 420 may determine, at the location 1920, a second part of the offset variation based on a received SSB. The user equipment 420 may update the second part of the offset variation at a location 1930 based on a received TRS. Optionally, a first time domain resource used by the user equipment 420 to receive the SSB may be configured by the network device 410, and a second time domain resource used by the user equipment 420 to receive the TRS may be configured by the network device 410.

Refer to FIG. 19. Assuming that the fixed value is equal to 1/2 of a second transmission periodicity, there are at least two occasions for the user equipment 420 to determine the second part of the offset variation within the second transmission periodicity.

In addition or optionally, the user equipment 420 may further: perform time-frequency offset compensation on another reference signal and/or other data based on the determined offset variation, where the another reference signal and/or the other data may include but are/is not limited to: a DMRS, a signal or data received via a PDCCH or a PDSCH, and the like.

In the implementation described above, the network device may pair the SSB with the TRS, and an interval between time domain positions of the SSB and the TRS that are paired with each other is a fixed value, and the fixed value is less than a first transmission periodicity (and/or the second transmission periodicity). In this manner, the network device may send, based on the fixed value, the TRS and the SSB at different time. In this way, the user equipment can obtain at least two occasions for determining the time-frequency offset variation within the second transmission periodicity, without increasing TRS resource overheads of the network device. Therefore, the user equipment can update the time-frequency offset variation in a more timely manner, thereby avoiding deterioration of data transmission performance.

The foregoing describes some implementations of the embodiments of the present disclosure with reference to the accompanying drawings. It should be understood that a person skilled in the art may form some other implementations through modification, combination, or the like based on the foregoing implementations, which still fall within the protection scope of the present disclosure. For example, the network device may send, at different time and at a specific time interval, different TRSs located within adjacent beam coverage ranges. Further, the network device may further determine an SSB transmission sequence based on a TRS transmission sequence. For example, there is a specific time interval between an SSB and a TRS that have a same coverage range. For example, the SSB and the TRS that have the same coverage range may be paired with each other. For example, the SSB transmission sequence is the same as the TRS transmission sequence.

In this manner, in this embodiment of the present disclosure, the user equipment can obtain, within the second transmission periodicity, a plurality of occasions for determining the time-frequency offset variation. In this way, time-frequency offset estimation and tracking can be performed more accurately, and transmission performance can be ensured.

It should be further understood that division of the manners, cases, categories, and embodiments in embodiments of the present disclosure are merely intended for ease of description, and should not constitute a particular limitation. The features of the manners, categories, cases, and embodiments, if logical, may be combined with each other.

It should be further understood that, the foregoing content is merely intended to help a person skilled in the art better understand embodiments of the present disclosure, instead of limiting the scope of embodiments of the present disclosure. The person skilled in the art may make various modifications, variations, combinations, or the like based on the foregoing content. A modified, changed, or combined solution also falls within the scope of embodiments of the present disclosure.

It should be further understood that the foregoing content descriptions focus on a difference between various embodiments. For same or similar parts, reference may be made to each other. For brevity, details are not described herein again.

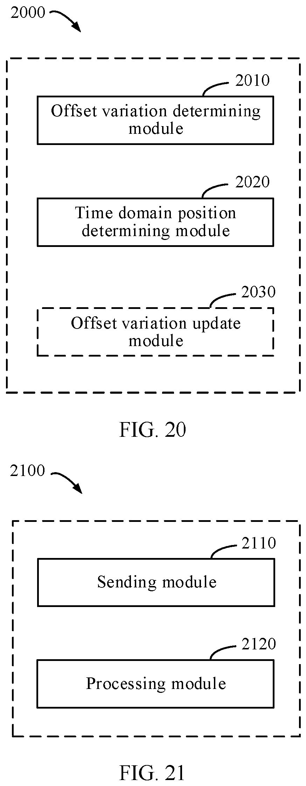

FIG. 20 is a block diagram of a communication apparatus 2000 according to some embodiments of the present disclosure. The apparatus 2000 may be implemented as the user equipment 420 shown in FIG. 4, or may be implemented as a part (for example, a chip) of the user equipment 420, or the like. This is not limited in the present disclosure. As shown in FIG. 20, the apparatus 2000 includes an offset variation determining module 2010, a time domain position determining module 2020, and an offset variation update module 2030.

In some implementations of the present disclosure, the offset variation determining module 2010 is configured to determine an offset variation between a user equipment and a network device based on a received first reference signal, where the offset variation includes a time offset variation and/or a frequency offset variation. The time domain position determining module 2020 is configured to determine, based on a time-domain delay amount of a second reference signal relative to the first reference signal, a time domain position of the second reference signal, where the time-domain delay amount is less than a transmission periodicity of the first reference signal. The offset variation update module 2030 is configured to update the offset variation based on the second reference signal detected at the time domain position.

In some embodiments, the apparatus 2000 may further include a receiving module, configured to receive configuration information from the network device, where the configuration information indicates the time-domain delay amount of the second reference signal relative to the first reference signal.

In some embodiments, the apparatus 2000 may further include a receiving module, configured to receive update configuration information from the network device, where the update configuration information indicates an updated time-domain delay amount of the second reference signal relative to the first reference signal.

In some embodiments, the apparatus 2000 may further include a receiving module, configured to receive configuration information from the network device, where the configuration information indicates a time-domain delay amount of a second signal group relative to a first signal group, the first signal group and the second signal group have a same beam coverage range, the first signal group includes the first reference signal, and the second signal group includes the second reference signal.

For example, the configuration information further indicates a signal measurement window, and the time domain position determining module 2020 may be specifically configured to: determine that for the time domain position, a time-domain delay amount after a reception time domain position of the first reference signal is used as a start point, and the signal measurement window is used as a time length.

In some examples, the apparatus 2000 may further include a second reference signal determining module, configured to: detect at least one signal within the time domain position; and determine the second reference signal from the at least one signal based on a signal parameter of each of the at least one signal. Optionally, the second reference signal determining module is configured to: determine the signal parameter of each of the at least one signal; and determine a signal whose signal parameter exceeds a preset threshold as the second reference signal. Optionally, the signal parameter includes at least one of the following: a signal strength, signal quality, or a signal-to-noise ratio.

In some embodiments, the offset variation determining module 2010 may be further configured to: determine a first part of the offset variation between the user equipment and the network device based on location information of the network device and location information of the user equipment, where the offset variation is a second part of the offset variation.

For example, the first reference signal is an SSB, and the second reference signal is a TRS.

For example, both the first reference signal and the second reference signal are TRSs, and the first reference signal and the second reference signal have adjacent beam coverage ranges.

In some other implementations of the present disclosure, the offset variation determining module 2010 is configured to determine an offset variation between the user equipment and the network device based on a received first reference signal, where the offset variation includes a time offset variation and/or a frequency offset variation. The time domain position determining module 2020 is configured to determine, based on a pairing relationship between a first-type signal and a second-type signal, a time domain position of a second reference signal that is paired with the first reference signal, where a time-domain delay amount between the first reference signal in the first-type signal and a second reference signal in the second-type signal that have a pairing relationship is a fixed value, and the fixed value is less than a transmission periodicity of the first reference signal. The offset variation update module 2030 is configured to update the offset variation based on the second reference signal detected at the time domain position.

For example, the apparatus 2000 may further include a receiving module, configured to receive configuration information from the network device, where the configuration information indicates the pairing relationship between the first-type signal and the second-type signal.

In some examples, the time domain position determining model 2020 may be specifically configured to: determine, based on the configuration information and the received first reference signal, the time domain position of the second reference signal that is paired with the first reference signal.

Optionally, the first reference signal and the second reference signal have a same beam coverage range. Optionally, the first-type signal is an SSB, and the second-type signal is a TRS.

The apparatus 2000 in FIG. 20 can be configured to implement the processes of the user equipment 420 in FIG. 4 to FIG. 19. For brevity, details are not described herein again.

FIG. 21 is a block diagram of a communication apparatus 2100 according to some embodiments of the present disclosure. The apparatus 2100 may be implemented as the network device 410 shown in FIG. 4, or may be implemented as a part (for example, a chip) of the network device 410. This is not limited in the present disclosure. As shown in FIG. 21, the apparatus 2100 includes a sending module 2110 and a processing module 2120.

In some implementations of the present disclosure, the sending module 2110 is configured to send a first reference signal to a user equipment. The processing module 2120 is configured to determine, based on a time-domain delay amount of a second reference signal relative to the first reference signal, a time domain position of the second reference signal, where the time-domain delay amount is less than a transmission periodicity of the first reference signal. The sending module 2110 is further configured to send the second reference signal to the user equipment at the time domain position.

In some embodiments, the sending module 2110 is further configured to send configuration information to the user equipment, where the configuration information indicates the time-domain delay amount of the second reference signal relative to the first reference signal.

In some embodiments, the sending module 2110 is further configured to send update configuration information to the user equipment, where the update configuration information indicates an updated time-domain delay amount of the second reference signal relative to the first reference signal.

In some embodiments, the sending module 2110 is further configured to send configuration information to the user equipment, where the configuration information indicates a time-domain delay amount of a second signal group relative to a first signal group, the first signal group and the second signal group have a same beam coverage range, the first signal group includes the first reference signal, and the second signal group includes the second reference signal.

For example, the configuration information further indicates a signal measurement window, and the signal measurement window represents a time length of the time domain position.

Optionally, the first reference signal is an SSB, and the second reference signal is a TRS.

Optionally, both the first reference signal and the second reference signal are TRSs, and the first reference signal and the second reference signal have adjacent beam coverage ranges.

In some other implementations of the present disclosure, the sending module 2110 is configured to send configuration information to the user equipment, where the configuration information indicates a pairing relationship between a first-type signal and a second-type signal, and a time-domain delay amount between the first reference signal in the first-type signal and a second reference signal in the second-type signal that have a pairing relationship is a fixed value, and the fixed value is less than a transmission periodicity of the first reference signal. The sending module 2110 is further configured to send the first reference signal to the user equipment. The sending module 2110 is further configured to send the second reference signal to the user equipment.

In some embodiments, a time-domain delay amount between a third reference signal in the first-type signal and a fourth reference signal in the second-type signal that have a pairing relationship is also the fixed value.

Optionally, the first reference signal and the second reference signal have a same beam coverage range. Optionally, the first-type signal is an SSB, and the second-type signal is a TRS.

Division into the modules or the units in embodiments of the present disclosure is an example, is merely logical function division, and may be other division during actual implementation. In addition, functional units in the disclosed embodiments may be integrated into one unit, or each of the units may exist alone physically, or two or more units may be integrated into one unit. The integrated unit may be implemented in a form of hardware, or may be implemented in a form of a software functional unit.

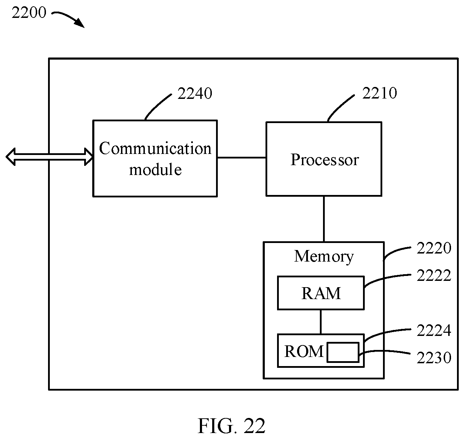

FIG. 22 is a block diagram of an example device 2200 that may be used to implement an embodiment of the present disclosure. The device 2200 may be implemented as or included in the network device 410 in FIG. 4, or may be implemented as or included in the user equipment 420 in FIG. 4.

As shown in FIG. 22, the device 2200 includes one or more processors 2210, one or more memories 2220 coupled to the processor 2210, and a communication module 2240 coupled to the processor 2210.

The communication module 2240 may be configured for bidirectional communication. The communication module 2240 may have at least one communication interface for communication. The communication interface may include any interface necessary for communicating with another device.

The processor 2210 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 2200 may have a plurality of processors, such as an application-specific integrated circuit chip, which belongs, in terms of time, to a clock synchronized with a primary processor.

The memory 2220 may include one or more non-volatile memories and one or more volatile memories. An example of the non-volatile memory includes but is not limited to at least one of the following: a read-only memory (Read-Only Memory, ROM) 2224, an erasable programmable read-only memory (Erasable Programmable Read Only Memory, EPROM), a flash memory, a hard disk, a compact disc (Compact Disc, CD), a digital video disc (Digital Versatile Disc, DVD), or another magnetic storage and/or optical storage. An example of the volatile memory includes but is not limited to at least one of the following: a random access memory (Random Access Memory, RAM) 2222, or another volatile memory that does not persist for power-off duration.

A computer program 2230 includes computer-executable instructions executed by the associated processor 2210. The program 2230 may be stored in the ROM 2224. The processor 2210 may perform any suitable action and processing by loading the program 2230 into the RAM 2222.

Embodiments of the present disclosure may be implemented by using the program 2230, so that the device 2200 can perform any process discussed with reference to FIG. 4 to FIG. 19. Embodiments of the present disclosure may alternatively be implemented by hardware or a combination of software and hardware.

The program 2230 may be included in a tangible form in a computer-readable medium, and the computer-readable medium may be included in the device 2200 (for example, in the memory 2220) or another storage device that is accessible by the device 2200. The program 2230 may be loaded from the computer-readable medium to the RAM 2222 for execution. The computer-readable medium may include a tangible non-volatile memory of any type, for example, a ROM, an EPROM, a flash memory, a hard disk, a CD, or a DVD.

In some embodiments, the communication module 2240 in the device 2200 may be implemented as a transmitter and a receiver (or a transceiver), and may be configured to send/receive a plurality of TCIs, at least one message, capability information, and the like. In addition, the device 2200 may further include one or more of a scheduler, a controller, and a radio frequency/antenna. Details are not described in the present disclosure.

For example, the device 2200 in FIG. 22 may be implemented as an electronic device, or may be implemented as a chip or a chip system in the electronic device. This is not limited in embodiments of the present disclosure.

An embodiment of the present disclosure further provides a chip. The chip may include an input interface, an output interface, and a processing circuit. In embodiments of the present disclosure, the input interface and the output interface may complete signaling or data interaction, and the processing circuit may complete generation and processing of signaling or data information.

An embodiment of the present disclosure further provides a chip system, including a processor, configured to support a compute device in implementing the function in any one of the foregoing embodiments. In a possible design, the chip system may further include a memory, configured to store necessary program instructions and data. When the processor runs the program instructions, a device in which the chip system is installed is caused to implement the method in any one of the foregoing embodiments. For example, the chip system may include one or more chips, or may include a chip and another discrete device.

An embodiment of the present disclosure further provides a processor, configured to be coupled to a memory. The memory stores instructions, and when the processor runs the instructions, the processor is caused to perform the method and the function in any one of the foregoing embodiments.

An embodiment of the present disclosure further provides a computer program or computer program product including instructions. When the computer program or the computer program product is run on a computer, a computer is caused to perform the method and the function in any one of the foregoing embodiments.

An embodiment of the present disclosure further provides a computer-readable storage medium. The computer-readable storage medium stores computer instructions. When a processor runs the instructions, the processor is caused to perform the method and the function in any one of the foregoing embodiments.

Usually, various embodiments of this application may be implemented by using hardware or a dedicated circuit, software, logic, or any combination thereof. Some aspects may be implemented by hardware, and other aspects may be implemented by firmware or software, and may be executed by a controller, a microprocessor, or another compute device. Although various aspects of embodiments of the present disclosure are shown and described as block diagrams, flowcharts, or some other figures, it should be understood that the blocks, apparatuses, systems, techniques, or methods described in this specification may be implemented as, for example, nonlimiting examples, hardware, software, firmware, dedicated circuits or logic, general-purpose hardware, controllers, other compute devices, or a combination thereof.

The present disclosure further provides at least one computer program product stored in a tangible form in a non-transitory computer-readable storage medium. The computer program product includes computer-executable instructions, for example, instructions included in a program module. The instructions are executed in a device on a real or virtual target processor, to perform the process/method described above with reference to the accompanying drawings. Usually, the program module includes a routine, a program, a library, an object, a class, a component, a data structure, or the like that executes a specific task or implements a specific abstract data type. In various embodiments, functions of the program module may be combined or split between the program modules based on a need. Machine-executable instructions for the program module may be executed locally or in a distributed device. In the distributed device, the program module may be locally located and located in a remote storage medium.

Computer program code for implementing the method in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed in the following manner: all program code is executed on a computer, some program code is executed on a computer, the program code is executed as an independent software package, some program code is executed on a computer and some program code is executed on a remote computer, or all program code is executed on a remote computer or server.

In the context of the present disclosure, the computer program code or related data may be carried in any appropriate carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or a signal propagated in another form, for example, a carrier wave and an infrared signal.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. A more detailed example of the computer-readable storage medium includes an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in the present disclosure are described in a particular order in the accompanying drawings, this does not require or imply that these operations need to be performed in the particular order, or that all the operations shown need to be performed to achieve a desired result. On the contrary, execution orders of the steps described in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to the present disclosure may be specific in one apparatus. Instead, the feature and function of one apparatus described above may be further divided into specific features and functions of a plurality of apparatuses.

The foregoing has described various implementations of the present disclosure. The foregoing descriptions are examples and are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to cause another person of ordinary skill in the art to understand the implementations disclosed in this specification.

**Claims**

1. A method for synchronization, comprising:

   determining an offset variation between a user equipment and a network device based on a received first reference signal, wherein the offset variation comprises a time offset variation and/or a frequency offset variation;
   determining, based on a time-domain delay amount of a second reference signal relative to the first reference signal, a time domain position of the second reference signal, wherein the time-domain delay amount is less than a transmission periodicity of the first reference signal; and
   updating the offset variation based on the second reference signal detected at the time domain position.

2. The method according to claim 1, further comprising:
   receiving configuration information from the network device, wherein the configuration information indicates the time-domain delay amount of the second reference signal relative to the first reference signal.

3. The method according to claim 2, further comprising:
receiving update configuration information from the network device, wherein the update configuration information indicates an updated time-domain delay amount of the second reference signal relative to the first reference signal.

4. The method according to claim 1, further comprising:
receiving configuration information from the network device, wherein the configuration information indicates a time-domain delay amount of a second signal group relative to a first signal group, the first signal group and the second signal group have a same beam coverage range, the first signal group comprises the first reference signal, and the second signal group comprises the second reference signal.

5. The method according to claim 4, wherein the configuration information further indicates a signal measurement window, and determining the time domain position of the second reference signal comprises:
determining that for the time domain position, the time-domain delay amount after a reception time domain position of the first reference signal is used as a start point, and the signal measurement window is used as a time length.

6. The method according to claim 5, further comprising:

   detecting at least one signal within the time domain position; and
   determining the second reference signal from the at least one signal based on a signal parameter of each of the at least one signal.

7. The method according to claim 6, wherein determining the second reference signal from the at least one signal comprises:

   determining the signal parameter of each of the at least one signal; and
   determining a signal whose signal parameter exceeds a preset threshold as the second reference signal.

8. The method according to claim 6 or 7, wherein the signal parameter comprises at least one of the following: a signal strength, signal quality, or a signal-to-noise ratio.

9. The method according to any one of claims 1 to 8, further comprising:
determining a first part of an offset variation between the user equipment and the network device based on location information of the network device and location information of the user equipment, wherein the offset variation is a second part of the offset variation.

10. The method according to any one of claims 1 to 9, wherein the first reference signal is a synchronization signal block SSB, and the second reference signal is a tracking reference signal TRS.

11. The method according to any one of claims 1 to 3, wherein both the first reference signal and the second reference signal are TRSs, and the first reference signal and the second reference signal have adjacent beam coverage ranges.

12. A method for synchronization, comprising:

   sending a first reference signal to a user equipment;
   determining, based on a time-domain delay amount of a second reference signal relative to the first reference signal, a time domain position of the second reference signal, wherein the time-domain delay amount is less than a transmission periodicity of the first reference signal; and
   sending the second reference signal to the user equipment at the time domain position.

13. The method according to claim 12, further comprising:
sending configuration information to the user equipment, wherein the configuration information indicates the time-domain delay amount of the second reference signal relative to the first reference signal.

14. The method according to claim 13, further comprising:
sending update configuration information to the user equipment, wherein the update configuration information indicates an updated time-domain delay amount of the second reference signal relative to the first reference signal.

15. The method according to claim 12, further comprising:

sending configuration information to the user equipment, wherein the configuration information indicates a time-domain delay amount of a second signal group relative to a first signal group, the first signal group and the second signal group have a same beam coverage range, the first signal group comprises the first reference signal, and the second signal group comprises the second reference signal.

16. The method according to claim 15, wherein the configuration information further indicates a signal measurement window, and the signal measurement window represents a time length of the time domain position.

17. The method according to any one of claims 12 to 16, wherein the first reference signal is a synchronization signal block SSB, and the second reference signal is a tracking reference signal TRS.

18. The method according to any one of claims 12 to 14, wherein both the first reference signal and the second reference signal are TRSs, and the first reference signal and the second reference signal have adjacent beam coverage ranges.

19. A method for synchronization, comprising:

determining an offset variation between a user equipment and a network device based on a received first reference signal, wherein the offset variation comprises a time offset variation and/or a frequency offset variation; determining, based on a pairing relationship between a first-type signal and a second-type signal, a time domain position of a second reference signal that is paired with the first reference signal, wherein a time-domain delay amount between the first reference signal in the first-type signal and the second reference signal in the second-type signal that have a pairing relationship is a fixed value, and the fixed value is less than a transmission periodicity of the first reference signal; and updating the offset variation based on the second reference signal detected at the time domain position.

20. The method according to claim 19, further comprising:
receiving configuration information from the network device, wherein the configuration information indicates the pairing relationship between the first-type signal and the second-type signal.

21. The method according to claim 20, wherein determining the time domain position of the second reference signal comprises:
determining, based on the configuration information and the received first reference signal, the time domain position of the second reference signal that is paired with the first reference signal.

22. The method according to any one of claims 19 to 21, wherein the first reference signal and the second reference signal have a same beam coverage range.

23. The method according to any one of claims 19 to 22, wherein the first-type signal is a synchronization signal block SSB, and the second-type signal is a tracking reference signal TRS.

24. A method for synchronization, comprising:

sending configuration information to a user equipment, wherein the configuration information indicates a pairing relationship between a first-type signal and a second-type signal, a time-domain delay amount between a first reference signal in the first-type signal and a second reference signal in the second-type signal that have a pairing relationship is a fixed value, and the fixed value is less than a transmission periodicity of the first reference signal; sending the first reference signal to the user equipment; and sending the second reference signal to the user equipment.

25. The method according to claim 24, wherein a time-domain delay amount between a third reference signal in the first-type signal and a fourth reference signal in the second-type signal that have a pairing relationship is also the fixed value.

26. The method according to claim 24 or 25, wherein the first reference signal and the second reference signal have a same beam coverage range.

27. The method according to any one of claims 24 to 26, wherein the first-type signal is a synchronization signal block SSB, and the second-type signal is a tracking reference signal TRS.

**28.** A communication apparatus for synchronization, comprising:
a component configured to perform the method according to any one of claims 1 to 11 or any one of claims 19 to 23.

**29.** A communication apparatus for synchronization, comprising:
a component configured to perform the method according to any one of claims 12 to 18 or any one of claims 24 to 27.

**30.** A user equipment, comprising:

at least one memory; and
at least one processor coupled to the at least one memory, wherein the at least one processor is configured to:
execute program instructions stored in the at least one memory, and cause the user equipment to perform the
method according to any one of claims 1 to 11 or any one of claims 19 to 23.

**31.** A network device, comprising:

at least one memory; and
at least one processor coupled to the at least one memory, wherein the at least one processor is configured to:
execute program instructions stored in the at least one memory, and cause the network device to perform the
method according to any one of claims 12 to 18 or any one of claims 24 to 27.

**32.** A computer-readable storage medium, wherein the computer-readable storage medium stores computer-executable
instructions, and when the computer-executable instructions are executed by a processor, the method according to
any one of claims 1 to 27 is implemented.

100 ⟍

101 · 110 · 120 · 102 · 103

Non-3GPP
protocol
Non-3GPP
protocol
NG(=N2/N3)
Core
network
N6
Data
network

N3IWF

FIG. 1

200 ⟍

201 · 210 · 220 · 202 · 203

NR
protocol
NR
protocol
NG(=N2/N3)
Core
network
N6
Data
network

gNB

FIG. 2

300 ⟍

301 · 310 · 320 · 302 · 303

NR
protocol
F1
NG(=N2/N3)
Core
network
N6
Data
network

Regenerative satellite
(including a gNB/DU)
gNB/CU

FIG. 3

400

410

Network device

420

User equipment

FIG. 4

500

410

Network device

420

User equipment

Configuration
information ⌐ 501

First reference ⌐ 510
signal

Determine an offset
variation ⌐ 520

Determine a time domain
position of a second
reference signal ⌐ 530

Second
reference signal ⌐ 540

Receive the second
reference signal ⌐ 550

Update the offset
variation ⌐ 560

FIG. 5

600

First transmission periodicity: 640 ms

| SFN #0 | SFN #1 | ● ● ● | SFN #62 | SFN #63 |

10-ms system frame

Slot | 0 | 1 | 2 | 3 | 4 | 5 | 6 | 7 | 8 | 9 | 10 | 11 | 12 | 13 | 14 | 15 | 16 | 17 | 18 | 19 |

| 0 | 1 | 2 | 3 | 4 | 5 | 6 | 7 | 8 | 9 | 10 | 11 | 12 | 13 |

SSB #0          SSB #1

FIG. 6

700

First transmission periodicity=Second transmission periodicity=640 ms

Time-domain delay amount: 325 ms

| 2 ms | 3 ms | | 2 ms | 3 ms |
|---|---|---|---|---|
| SSBs #0 to #7 | TRSs #128 to #135 | | SSBs #128 to #135 | TRSs #0 to #7 |

5 ms                                                  5 ms

Time

Occasion 710

Occasion 720

FIG. 7

800

First transmission periodicity=640 ms, and second transmission periodicity=320 ms

| | Time-domain delay amount: 165 ms | | Second transmission periodicity: 320 ms | | |
|---|---|---|---|---|---|
| 2 ms | 2 ms | 3 ms | | 3 ms | 2 ms |
| SSBs #0 to #7 | SSBs #64 to #71 | TRSs #0 to #7 | | TRSs #0 to #7 | SSBs #0 to #7 |

Time

First transmission periodicity: 640 ms

Occasion                 Occasion                 Occasion

FIG. 8

900 ⟍

First transmission periodicity=640 ms, and
second transmission periodicity=1280 ms

```
                          Second transmission
                          periodicity: 1280 ms
Time-domain delay      ┌──────────────────────────────────────┐
amount: 325 ms         │                                      │
←──────────────→
┌─────────┐     ┌─────────┐   ┌─────────┐      ┌─────────┐      ┌─────────┐
│  2 ms   │     │  3 ms   │   │  2 ms   │      │  2 ms   │      │  3 ms   │
│         │     │         │   │         │      │         │      │         │
│ SSBs #0 │     │ TRSs #0 │   │ SSBs #0 │      │ SSBs #0 │      │ TRSs #0 │
│ to #7   │     │ to #7   │   │ to #7   │      │ to #7   │      │ to #7   │
└─────────┘     └─────────┘   └─────────┘      └─────────┘      └─────────┘
                                                                         Time
←──────────────────────────→
   First transmission          ↑          ↑              ↑
   periodicity: 640 ms

                          Occasion    Occasion       Occasion
```

FIG. 9

1000 ⟍

Movement
direction of
a satellite

| 15 | 31 | 47 | ... | ... | 255 |
|----|----|----|-----|-----|-----|
| 14 | 30 | 46 | ... | ... | 254 |
| ... | ... | ... | ... | ... | ... |
| ... | ... | ... | ... | ... | ... |
| 3 | 19 | 35 | ... | ... | 243 |
| 2 | 18 | 34 | ... | ... | 242 |
| 1 | 17 | 33 | ... | ... | 241 |
| 0 | 16 | 32 | ... | ... | 240 |

Location
of a user    ⟶    (14 ...)
equipment

FIG. 10

1100

Satellite
ephemeris

Location of a
user equipment

ECEF coordinate

ECEF coordinate

Relative velocity
and included angle

Relative
distance

Calculate a
frequency offset

Calculate a
time offset

FIG. 11

FIG. 12

Movement direction
of a satellite

↑

| 15 | 31 | 47 | ... | ... | 255 |
| 14 | 30 | 46 | ... | ... | 254 |
| ... | ... | ... | ... | ... | ... |
| ... | ... | ... | ... | ... | ... |
| 3 | 19 | 35 | ... | ... | 243 |
| 2 | 18 | 34 | ... | ... | 242 |
| 1 | 17 | 33 | ... | ... | 241 |
| 0 | 16 | 32 | ... | ... | 240 |

Location
of a user
equipment

Potential
to-be-measured SSB

1300

FIG. 13

1400

1/2 × first transmission periodicity

2 ms

SSBs #0 to #7

2 ms

SSBs #128 to #135

1401

User-level TRS Time domain position

Time

Less than 340 ms

Occasion 1410

Occasion 1420

FIG. 14

1500

Movement direction of a satellite

| 3 | 7 | 11 | 15 |
| 2 | 6 | 10 | 14 |
| 1 | 5 | 9 | 13 |
| 0 | 4 | 8 | 12 |

Location of a user equipment

1510

FIG. 15

FIG. 16

FIG. 17

1800

410
Network device

420
User equipment

Configuration information — 1810

First reference signal — 1820

1830
Determine an offset variation

1840
Determine a time domain position of a second reference signal

Second reference signal — 1850

1860
Receive the second reference signal

1870
Update the offset variation

FIG. 18

FIG. 19

2000

```
┌ ─ ─ ─ ─ ─ ─ ─ ─ ─ ─ ─ ─ ─ ─ ─ ┐
│                          ⌐ 2010 │
│  ┌───────────────────────────┐  │
│  │ Offset variation determining │ │
│  │         module            │  │
│  └───────────────────────────┘  │
│                                 │
│                          ⌐ 2020 │
│  ┌───────────────────────────┐  │
│  │    Time domain position    │  │
│  │    determining module      │  │
│  └───────────────────────────┘  │
│                                 │
│                          ⌐ 2030 │
│  ┌ ─ ─ ─ ─ ─ ─ ─ ─ ─ ─ ─ ─ ┐  │
│  │  Offset variation update  │  │
│  │         module            │  │
│  └ ─ ─ ─ ─ ─ ─ ─ ─ ─ ─ ─ ─ ┘  │
│                                 │
└ ─ ─ ─ ─ ─ ─ ─ ─ ─ ─ ─ ─ ─ ─ ─ ┘
```

FIG. 20

2100

```
┌ ─ ─ ─ ─ ─ ─ ─ ─ ─ ─ ─ ─ ─ ─ ─ ┐
│                          ⌐ 2110 │
│  ┌───────────────────────────┐  │
│  │     Sending module        │  │
│  └───────────────────────────┘  │
│                                 │
│                          ⌐ 2120 │
│  ┌───────────────────────────┐  │
│  │    Processing module      │  │
│  └───────────────────────────┘  │
│                                 │
└ ─ ─ ─ ─ ─ ─ ─ ─ ─ ─ ─ ─ ─ ─ ─ ┘
```

FIG. 21

2200

FIG. 22

## INTERNATIONAL SEARCH REPORT

| International application No. |
| --- |
| **PCT/CN2024/104147** |

| A. | CLASSIFICATION OF SUBJECT MATTER |
| --- | --- |

H04W56/00(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 同步, 偏移, 偏差, 时间, 频率, 时偏, 频偏, 时频, 跟踪, 估计, 补偿, 更新, 第一, 第二, 参考信号, SSB, TRS, synchronization, offset, time, frequency, track+, estimat+, compensat+, updat+, first, second, reference signal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020199063 A1 (HUAWEI TECHNOLOGIES CO., LTD.) 08 October 2020 (2020-10-08) <br> description, page 5, line 39-page 16, line 33 | 1-18, 28-32 |
| A | CN 110800351 A (GUANGDONG OPPO MOBILE TELECOMMUNICATIONS CORP., LTD.) 14 February 2020 (2020-02-14) <br> entire document | 1-32 |
| A | CN 114173409 A (HUAWEI TECHNOLOGIES CO., LTD.) 11 March 2022 (2022-03-11) <br> entire document | 1-32 |
| A | CN 115606145 A (QUALCOMM INC.) 13 January 2023 (2023-01-13) <br> entire document | 1-32 |
| A | WO 2023051326 A1 (HUAWEI TECHNOLOGIES CO., LTD.) 06 April 2023 (2023-04-06) <br> entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 August 2024** | **10 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/104147** |

| Patent document cited in search report | | | Publication date (day/month/year) | Patent family member(s) | Publication date (day/month/year) |
|---|---|---|---|---|---|
| WO | 2020199063 | A1 | 08 October 2020 | None | |
| CN | 110800351 | A | 14 February 2020 | None | |
| CN | 114173409 | A | 11 March 2022 | None | |
| CN | 115606145 | A | 13 January 2023 | None | |
| WO | 2023051326 | A1 | 06 April 2023 | None | |

Form PCT/ISA/210 (patent family annex) (July 2022)